# EUROPEAN PATENT APPLICATION

(11) **EP 4 601 240 A1**
(43) Date of publication of application: **13.08.2025**
(21) Application number: 22963024.9
(22) Date of filing: 25.10.2022
(51) Int. Cl.: H04L 9/00, H04L 9/40, H04W 12/106

(54) **COMMUNICATION METHOD AND COMMUNICATION APPARATUS**

(71) Applicant: Huawei Technologies Co., Ltd., Shenzhen, Guangdong 518129 (CN)
(72) Inventor: WANG, Wenhui, Shenzhen, Guangdong 518129 (CN); WU, Jianjun, Shenzhen, Guangdong 518129 (CN); SUN, Li, Shenzhen, Guangdong 518129 (CN)
(74) Representative: Goddar, Heinz J.
(86) International application number: PCT/CN2022/127504
(87) International publication number: WO 2024/087038

(57) **Abstract**

This application provides a communication method and a communication apparatus. At least one of all or a part of a payload of a physical channel, a check code, an anti-replay parameter, a key, and downlink control information may be used as an input of a security algorithm, and information used to perform integrity protection on the payload of the physical channel is obtained through calculation. This can implement physical layer integrity protection, and help improve security of signaling or data between a transmit end and a receive end.

## Description

### TECHNICAL FIELD

This application relates to the communication field, and more specifically, to a communication method and a communication apparatus.

### BACKGROUND

Currently, in a wireless cellular network, a control plane protocol stack relates only to security protection of non-access stratum (non-access stratum, NAS) signaling and radio resource control (radio resource control, RRC) signaling, and the security protection includes signaling encryption, integrity protection, anti-replay attacks, and the like. Security protection of a user plane protocol stack is performed at a packet data convergence protocol (Packet Data Convergence Protocol, PDCP) layer, and includes encryption, integrity protection, and anti-replay attacks. The PDCP layer provides security protection for RRC signaling and user data. No security protection is provided for signaling and data at protocol layers below the PDCP layer.

### SUMMARY

This application provides a communication method and a communication apparatus, to implement physical layer integrity protection, and help improve security of signaling or data between a transmit end and a receive end.

According to a first aspect, a communication method is provided. The method may be performed by a transmit end, or may be performed by a module or a unit in a transmit end. Optionally, the transmit end may be a terminal or a network device (for example, a base station).

The method includes: obtaining a first code block and first information, where the first code block is a payload of a physical channel, the first information includes at least one of the following information: all or a part of the payload of the first code block, a first check code, an anti-replay parameter, a key, or downlink control information, and the downlink control information is used to schedule the first code block; determining first integrity protection information based on the first information and a security algorithm; determining a second code block based on the first code block and the first integrity protection information, where the second code block includes the first code block and the first integrity protection information; and outputting the second code block.

The first integrity protection information is used to perform integrity protection on the first code block.

According to the foregoing method, physical layer integrity protection may be implemented, and security of signaling or data between a transmit end and a receive end is improved. In addition, when the check code is used as an input of the security algorithm, an error detection function of the check code may be fully used. When the downlink control information is used as an input of the security algorithm, an association relationship between the downlink control information and a physical uplink shared channel or a physical uplink shared channel may be used, to further improve attack difficulty. When a cell-level parameter and a configuration parameter of the physical channel are used as an input of the security algorithm, an anti-replay capability may be provided, for example, to prevent an attacker from performing encoding in other time frequency, frequency domain, or spatial domain or based on another parameter and from replaying signaling or data.

With reference to the first aspect, in a possible implementation, the first check code includes a check code of the first code block and/or a check code of a transport block to which the first code block belongs.

According to the foregoing method, when the check code includes the check code of the transport block to which the code block belongs, because the check code of the transport block to which the code block belongs is obtained through calculation based on the transport block, integrity protection can be provided for all of the payload of the physical channel to some extent.

With reference to the first aspect or any implementation of the first aspect, in another possible implementation, the second code block does not include the check code of the first code block.

In other words, the transmit end replaces the check code of the first code block with the first integrity protection information.

According to the foregoing method, the second code block does not include the check code of the first code block, to reduce transmission bits.

With reference to the first aspect or any implementation of the first aspect, in another possible implementation, when the first information includes the part of the payload of the first code block, the method further includes: obtaining the part of the payload of the first code block based on a first offset and a first length, where the first offset is an offset of a start location of the part of the payload of the first code block relative to a start location of the first code block, and the first length is a length of the part of the payload of the first code block; or segmenting the first code block into a plurality of code subblocks based on segmentation information, and obtaining a partial payload of each of the plurality of code subblocks based on a second offset and a second length, where the part of the payload of the first code block includes the partial payload of each code subblock, the second offset is an offset of a start location of the partial payload of each code subblock relative to a start location of the code subblock, and the second length is a length of the partial payload of each code subblock.

According to the foregoing method, the part of the payload of the first code block may be used as input of the security algorithm. In comparison with using all of the payload of the first code block as an input of the security algorithm, a length of a bit sequence of the input of the security algorithm can be reduced, to reduce calculation complexity. When the part of the payload of the first code block and the first check code are used as an input of the security algorithm, integrity protection may be provided for all of the payload of the first code block while the length of the bit sequence of the input of the security algorithm is reduced.

With reference to the first aspect or any implementation of the first aspect, in another possible implementation, the first offset, the first length, the segmentation information, the second offset, and the second length are carried in the downlink control information.

With reference to the first aspect or any implementation of the first aspect, in another possible implementation, the physical channel is a physical uplink shared channel, a physical downlink shared channel, a physical uplink control channel, or a physical downlink control channel.

With reference to the first aspect or any implementation of the first aspect, in another possible implementation, when the first information includes the downlink control information, the physical channel is a physical uplink shared channel or a physical downlink shared channel.

According to the foregoing method, the association relationship between the downlink control information and the physical uplink shared channel or the physical uplink shared channel may be used, to further improve security.

With reference to the first aspect or any implementation of the first aspect, in another possible implementation, the anti-replay parameter includes a cell-level parameter and/or a configuration parameter of the physical channel, the cell-level parameter includes at least one of the following parameters: a physical cell identifier, a frequency or a frequency point of a link, system bandwidth, or bandwidth part (BandWidth Part, BWP) information, and the configuration parameter of the physical channel includes at least one of the following parameters: a time domain parameter, a frequency domain parameter, a sequence generation parameter, a transmit power control parameter, or an encoding parameter.

According to the foregoing method, an attacker can be prevented from performing encoding in other time frequency, frequency domain, or spatial domain or based on another parameter and from replaying signaling or data.

With reference to the first aspect or any implementation of the first aspect, in another possible implementation, the security algorithm is an integrity protection algorithm that is based on a symmetric key.

With reference to the first aspect or any implementation of the first aspect, in another possible implementation, the method further includes: after an access stratum security protection mode is completed, activating a physical layer integrity protection mechanism.

With reference to the first aspect or any implementation of the first aspect, in another possible implementation, the method further includes: after radio link control reconfiguration is completed, updating the configuration parameter of the physical channel.

According to a second aspect, a communication method is provided. The method may be performed by a receive end, or may be performed by a module or a unit in a receive end. Optionally, the receive end may be a terminal or a network device.

For technical effect of the method shown in the second aspect and possible implementations of the second aspect, refer to the first aspect and the possible implementations of the first aspect. Details are not described again.

The method includes: obtaining a received code block of a physical channel, where the received code block includes a payload of the physical channel and second integrity protection information; obtaining second information, where the second information includes at least one of the following information: all or a part of the payload of the physical channel, a second check code, an anti-replay parameter, a key, or downlink control information, the downlink control information is used to schedule the received code block, and the second check code is obtained based on the payload of the physical channel; determining third integrity protection information based on the second information and a security algorithm; and performing integrity check on the payload of the physical channel based on the second integrity protection information and the third integrity protection information.

With reference to the second aspect, in a possible implementation, the second check code includes a check code of the payload of the physical channel and/or a check code of a transport block to which the payload of the physical channel belongs.

With reference to the second aspect or any implementation of the second aspect, in another possible implementation, the received code block does not include the check code of the payload of the physical channel.

With reference to the second aspect or any implementation of the second aspect, in another possible implementation, when the second information includes the part of the payload of the physical channel, the method further includes: obtaining the part of the payload of the physical channel based on a first offset and a first length, where the first offset is an offset of a start location of the part of the payload of the physical channel relative to a start location of the payload of the physical channel, and the first length is a length of the part of the payload of the physical channel; or segmenting the payload of the physical channel into a plurality of code subblocks based on segmentation information, and obtaining a partial payload of each of the plurality of code subblocks based on a second offset and a second length, where the part of the payload of the physical channel includes the partial payload of each code subblock, the second offset is an offset of a start location of the partial payload of each code subblock relative to a start location of the code subblock, and the second length is a length of the partial payload of each code subblock.

With reference to the second aspect or any implementation of the second aspect, in another possible implementation, the first offset, the first length, the segmentation information, the second offset, and the second length are carried in the downlink control information.

With reference to the second aspect or any implementation of the second aspect, in another possible implementation, the physical channel is a physical uplink shared channel, a physical downlink shared channel, a physical uplink control channel, or a physical downlink control channel.

With reference to the second aspect or any implementation of the second aspect, in another possible implementation, when the second information includes the downlink control information, the physical channel is a physical uplink shared channel or a physical downlink shared channel.

With reference to the second aspect or any implementation of the second aspect, in another possible implementation, the anti-replay parameter includes a cell-level parameter and/or a configuration parameter of the physical channel, the cell-level parameter includes at least one of the following parameters: a physical cell identifier, a frequency or a frequency point of a link, system bandwidth, or BWP information, and the configuration parameter of the physical channel includes at least one of the following parameters: a time domain parameter, a frequency domain parameter, a sequence generation parameter, a transmit power control parameter, or an encoding parameter.

With reference to the second aspect or any implementation of the second aspect, in another possible implementation, the security algorithm is an integrity protection algorithm that is based on a symmetric key.

With reference to the second aspect or any implementation of the second aspect, in another possible implementation, the method further includes: after an access stratum security protection mode is completed, activating a physical layer integrity protection mechanism.

With reference to the second aspect or any implementation of the second aspect, in another possible implementation, the method further includes: after radio link control reconfiguration is completed, updating the configuration parameter of the physical channel.

According to a third aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a transmit end or a receive end. When the apparatus is a transmit end or a receive end, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used at a transmit end or a receive end. When the apparatus is a chip, a chip system, or a circuit used in a transmit end or a receive end, the communication unit may be an input/output interface, an interface circuit, an output circuit, an input circuit, a pin, a related circuit, or the like in the chip, the chip system, or the circuit, and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a transmit end or a receive end.

In another implementation, the apparatus is a chip, a chip system, or a circuit used at a transmit end or a receive end.

According to a fifth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a sixth aspect, a processor is provided, and is configured to perform the methods provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to a seventh aspect, a computer-readable storage medium is provided. The computer-readable medium stores program code to be executed by a device, and the program code is used to perform the method provided in any one of the foregoing aspects or the implementations of the foregoing aspects.

According to an eighth aspect, a computer program product including instructions is provided. When the computer program product runs on a computer, the computer is enabled to perform the method provided in any one of the foregoing aspects or the implementations of the foregoing aspects.

According to a ninth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a number of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to a tenth aspect, a communication system is provided, and includes the foregoing transmit end and/or receive end.

### BRIEF DESCRIPTION OF DRAWINGS

FIG. 1 is a diagram of an architecture of a communication system to which an embodiment of this application is applicable;
FIG. 2 is a diagram of an architecture of another communication system to which an embodiment of this application is applicable;
FIG. 3 is a diagram of signaling interaction between a terminal and a network in an initial access phase;
FIG. 4 is a diagram of a control plane protocol stack;
FIG. 5 is a diagram of a user plane protocol stack;
FIG. 6 is a schematic flowchart in which an attacker obtains PDCCH resource configuration and a spoofing DCI instruction;
FIG. 7 is a schematic flowchart of a communication method 700 according to this application;
FIG. 8 is a schematic flowchart of a method for activating a physical layer integrity protection mechanism;
FIG. 9 is a schematic flowchart of a method for updating a physical layer integrity protection parameter;
FIG. 10 is an overall diagram of a communication method according to this application;
FIG. 11 is a diagram of a physical layer integrity protection method for a PDCCH;
FIG. 12 is a diagram of a physical layer integrity protection method for a PUCCH;
FIG. 13 is a diagram of a physical layer integrity protection method for a PDSCH or a PUSCH;
FIG. 14 is another diagram of a physical layer integrity protection method for a PDSCH or PUSCH;
FIG. 15 is another diagram of a physical layer integrity protection method for a PDSCH or PUSCH;
FIG. 16 is a diagram of a structure of an apparatus according to an embodiment of this application; and
FIG. 17 is a diagram of another structure of an apparatus according to an embodiment of this application.

### DESCRIPTION OF EMBODIMENTS

The following describes technical solutions of embodiments in this application with reference to accompanying drawings.

For ease of understanding embodiments of this application, before embodiments of this application are described, the following descriptions are first provided.

In this application, "indicating" or "indicate" may include a direct indication and an indirect indication, or "indicating" or "indicate" may be an explicit indication and/or an implicit indication. For example, when a piece of indication information is described as indicating information I, the indication information may directly indicate I or indirectly indicate I, but it does not necessarily indicate that the indication information carries I. For another example, the implicit indication may be based on a location and/or a resource used for transmission; and the explicit indication may be based on one or more parameters, and/or one or more indexes, and/or one or more bit patterns represented by the explicit indication.

Definitions listed for many features in this application are merely used to explain functions of the features by using examples. For detailed content of the definitions, refer to a conventional technology.

In the following embodiments, first, second, third, fourth, and various numbers are merely used for differentiation for ease of description, but are not used to limit the scope of embodiments of this application, for example, used for differentiation between different fields and different information.

"Predefinition" may be implemented by prestoring, in a device, corresponding code, a table, or another manner that may indicate related information. A specific implementation is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, words such as "example", "for example", "such as", and "in an (another) example" are used to represent giving an example, an illustration, or a description. Any embodiment or design scheme described as an "example" in this application should not be explained as being more preferred or having more advantages than another embodiment or design scheme. Exactly, the word "example" is for presenting a concept in a specific manner.

The terms "include", "have", and their variants all mean "include but are not limited to", unless otherwise specifically emphasized in another manner.

"At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

In embodiments of this application, related descriptions about sending a message, information, or data by a network element A to a network element B, and receiving, by the network element B, the message, the information, or the data from the network element A are intended to describe a network element to which the message, the information, or the data is to be sent. Whether the message, the information, or the data is directly sent or indirectly sent through another network element is not limited.

In embodiments of this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

Embodiments of this application can be applied to various communication systems, for example, a long term evolution (long term evolution, LTE) system, an LTE frequency division duplex (frequency division duplex, FDD) system, an LTE time division duplex (time division duplex, TDD) system, a public land mobile network (public land mobile network, PLMN), a 5th generation (5th generation, 5G) system, a 6th generation (6th generation, 6G) system, or a future communication system. The 5G system in this application includes a non-standalone (non-standalone, NSA) 5G mobile communication system or a standalone (standalone, SA) 5G mobile communication system. Embodiments of this application may be further applied to a non-terrestrial network (non-terrestrial network, NTN) communication system such as a satellite communication system. Embodiments of this application may be further applied to a device-to-device (device-to-device, D2D) communication system, a sidelink (sidelink, SL) communication system, a machine-to-machine (machine-to-machine, M2M) communication system, a machine-type communication (machine-type communication, MTC) system, an Internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

A base station (which is also referred to as an access network device) in this application may be a device configured to communicate with a terminal, or may be a device that connects a terminal to a wireless network. The base station may be a node in a radio access network. The base station may include a macro base station (high-power cellular base station) and/or a micro base station (low-power cellular base station). The macro base station includes a macro cell (macro cell), and the micro base station includes a micro cell (micro cell), a pico cell (pico cell), and a femto cell (femto cell). The base station may further include an evolved NodeB (evolved NodeB, eNodeB), a transmission reception point (transmission reception point, TRP), an access point, a base station transceiver, a wireless base station, a wireless transceiver, a transceiver function module, a basic service set (basic service set, BSS), an extended service set (Extend Service Set, ESS), a transmission reception point (transmission reception point, TRP), a home base station (for example, a home evolved NodeB or a home NodeB, HNB), a Wi-Fi access point (access point, AP), a mobile switching center, a next generation NodeB (next generation NodeB, gNB) in a 5G mobile communication system, a next generation base station in a 6th generation (6th generation, 6G) mobile communication system, a base station or a module of a base station in an open access network ORAN (open RAN, ORAN) system, a base station in a future mobile communication system, or the like. Alternatively, the base station may be a module or unit that completes some functions of the base station.

The access network device may include a CU and a DU. This design may be referred to as CU and DU separation. A plurality of DUs may be controlled by one CU in a centralized manner. For example, an interface between the CU and the DU is referred to as an F1 interface. A control plane (control plane, CP) interface may be F1-C, and a user plane (user plane, UP) interface may be F1-U. A specific name of each interface is not limited in this disclosure. The CU and the DU may be classified based on a protocol layer of a wireless network. For example, functions of a PDCP layer and a protocol layer (for example, an RRC layer and an SDAP layer) above the PDCP layer are configured in the CU, and functions of a protocol layer (for example, an RLC layer, a MAC layer, and a PHY layer) below the PDCP layer are configured in the DU. For another example, the functions of the protocol layer above the PDCP layer are configured in the CU, and the functions of the protocol layer below the PDCP layer are configured in the DU. This is not limited.

The division into the processing functions of the CU and the DU based on protocol layers is merely an example, and may also be another division manner. For example, the CU or the DU may be divided to have functions of more protocol layers. For another example, the CU or the DU is divided to have a part of processing functions of protocol layers. For example, a part of functions of the RLC layer and functions of protocol layers above the RLC layer are set in the CU, and remaining functions of the RLC layer and functions of protocol layers below the RLC layer are set in the DU. For another example, division into functions of the CU or the DU may alternatively be performed based on service types or other system requirements. For example, division may be performed based on latency. Functions whose processing time needs to meet a latency requirement are set in the DU, and functions whose processing time does not need to meet the latency requirement are set in the CU.

Optionally, the CU may have one or more functions of the core network.

Optionally, a radio unit (radio unit, RU) of the DU may be disposed remotely. The RU has a radio frequency function. For example, the DU and the RU may be divided at the PHY layer. For example, the DU may implement a higher-layer function of the PHY layer, and the RU may implement a lower-layer function of the PHY layer. When sending is performed, functions of the PHY layer may include at least one of the following: adding a cyclic redundancy check (cyclic redundancy check, CRC) bit, channel encoding, rate matching, scrambling, modulation, layer mapping, precoding, resource mapping, physical antenna mapping, or radio frequency sending. When receiving is performed, functions of the PHY layer may include at least one of the following: CRC check, channel decoding, de-rate matching, descrambling, demodulation, layer demapping, channel detection, resource demapping, physical antenna demapping, or a radio frequency receiving function. The higher-layer functions of the PHY layer may include a part of functions of the PHY layer. For example, the part of functions is closer to the MAC layer. The lower-layer functions of the PHY layer may include another part of functions of the PHY layer. For example, the part of functions is closer to a radio frequency function. For example, the higher-layer functions of the PHY layer may include adding a CRC bit, channel encoding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include adding a CRC bit, channel encoding, rate matching, scrambling, modulation, layer mapping, and precoding, and the lower-layer functions of the PHY layer may include resource mapping, physical antenna mapping, and radio frequency sending functions. For example, the higher-layer function of the PHY layer may include CRC check, channel decoding, de-rate matching, decoding, demodulation, and layer demapping, and the lower-layer function of the PHY layer may include channel detection, resource demapping, physical antenna demapping, and radio frequency receiving functions. Alternatively, the higher-layer function of the PHY layer may include CRC check, channel decoding, de-rate matching, decoding, demodulation, layer demapping, and channel detection, and the lower-layer function of the PHY layer may include resource demapping, physical antenna demapping, and radio frequency receiving functions.

Optionally, the functions of the CU may be further divided, and a control plane and a user plane are split and implemented by using different entities. Split entities are a control plane CU entity (namely, a CU-CP entity) and a user plane CU entity (namely, a CU-UP entity). The CU-CP entity and the CU-UP entity may be separately connected to the DU. In this application, an entity may be understood as a module or a unit, and may exist in a form of a hardware structure, a software module, or a combination of a hardware structure and a software module. This is not limited.

Optionally, any one of the CU, the CU-CP, the CU-UP, the DU, and the RU may be a software module, a hardware structure, or a combination of a software module and a hardware structure. This is not limited. Different entities may exist in a same form or different forms. For example, the CU, the CU-CP, the CU-UP, and the DU are software modules, and the RU is a hardware structure. For brevity of description, all possible combination forms are not enumerated herein. The modules and methods performed by the modules also fall within the protection scope of this application. For example, when the method in this application is performed by an access network device (or a base station), the method may be specifically performed by at least one of a CU, a CU-CP, a CU-UP, a DU, or an RU.

Alternatively, the base station may be a device or the like that undertakes a base station function in a D2D communication system, a V2X communication system, an M2M communication system, and an IoT communication system. Alternatively, the base station may be a network device in an NTN. In other words, the base station may be deployed on a high-altitude platform or a satellite. The base station may also be a relay node, a donor node, or the like. A specific technology used by the base station and a device form and a name of the base station are not limited in embodiments of this application. The base station may be referred to as a radio access network device, a network device, or the like.

The terminal in this application may also be referred to as a wireless terminal device, user equipment (user equipment, UE), a user, an access terminal, a subscriber unit, a subscriber station, a mobile station, a mobile console, a remote station, a remote terminal, a mobile device, a user terminal, a terminal device, a wireless communication device, a user agent, a user apparatus, or the like. For ease of description, all the devices are collectively referred to as a terminal below. The terminal is a device that can access a network. The terminal and the base station may communicate with each other by using an air interface technology (for example, an NR or LTE technology). Terminals may also communicate with each other by using an air interface technology (for example, the NR or LTE technology). The terminal may be a cellular phone, a mobile phone, a session initiation protocol (SIP, Session Initiation Protocol) phone, a notebook computer, a personal digital assistant (PDA, personal digital assistant), a satellite radio, a global positioning system, a multimedia device, a smart video device, a digital audio player, a game console, a tablet computer, a smart device, a wearable device, a smart watch, a vehicle, a smart meter, an air pump, a large or small kitchen appliance, a health care device, a sensor/executor, a display, or any other similar functional device. Alternatively, the terminal may be an Internet of Things (Internet of things, IoT) device (for example, a parking timer, a smart meter, an oil pump, a vehicle, or a heart monitor). The terminal may be a station, a mobile station, a subscriber station, a mobile unit, a subscriber unit, a radio unit, a remote unit, a mobile device, a wireless device, a wireless communication device, a remote device, a mobile subscriber station, an access terminal, a mobile terminal, a wireless terminal, a remote terminal, a mobile phone, a user agent, a mobile client, a client, a computer with a wireless transceiver function, a virtual reality (virtual reality, VR) terminal, an augmented reality (augmented reality, AR) terminal, a terminal in satellite communication, a terminal in an integrated access and backhaul (integrated access and backhaul, IAB) system, a terminal in a Wi-Fi communication system, a terminal in industrial control (industrial control), a terminal in self driving (self driving), a terminal in telemedicine (remote medical), a terminal in a smart grid (smart grid), a terminal in transportation safety (transportation safety), a terminal in a smart city (smart city), a terminal in a smart home (smart home), and the like. A specific technology used by the UE and a specific device form of the UE are not limited in embodiments of this application.

The technical solutions provided in embodiments of this application may be applied to wireless communication between communication devices. Wireless communication between communication devices may include: wireless communication between a base station and a terminal, wireless communication between base stations, and wireless communication between terminals. In embodiments of this application, the term "wireless communication" may also be briefly referred to as "communication", and the term "communication" may also be described as "data transmission", "information transmission", or "transmission".

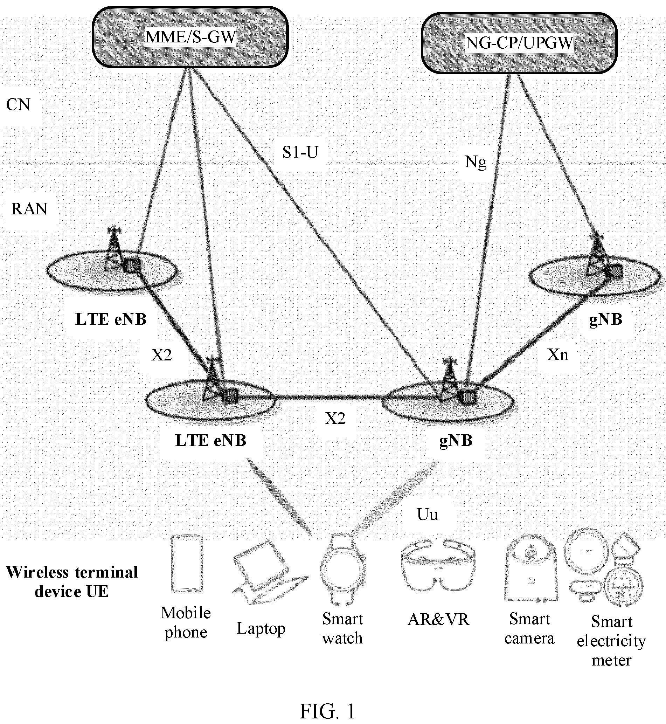

For example, FIG. 1 is a diagram of an architecture of a communication system to which an embodiment of this application is applicable.

As shown in FIG. 1, the communication system includes a core network (core network, CN), a radio access network (radio access network, RAN), and a terminal. The core network includes a 4th generation (4th generation, 4G) evolved packet core (evolved packet core, EPC) network and a 5G core (5G core, 5GC) network. The radio access network includes a 4G base station (for example, an LTE eNB) and a 5G base station (for example, an NR gNB).

The 4G LTE eNB may be connected to a 4G core network via a backhaul network (an S1 interface). The 5G NR gNB may be connected to the 5G core network via a backhaul network (an Ng interface), or to an LTE EPC through an S1 interface. The base station may perform one or more of the following functions: transmission of user data and control signaling, encryption and decryption of user data or air interface signaling, integrity protection, header compression, mobility control functions (for example, handover and dual connectivity), inter-cell interference coordination, connection setup and release, load balancing, distribution of a non-access stratum (non-access stratum, NAS) message, NAS node selection, synchronization, paging, positioning and transfer of warning information, radio access network sharing, a multimedia broadcast multicast service, tracking of a user and a device, RAN information management, and the like. A plurality of base stations may directly or indirectly communicate with each other via the backhaul network (an X2 or Xn interface). Wireless communication may be performed between the base station and the terminal. The base station provides an access point to the EPC or the 5GC core network for the terminal. Each base station may provide a communication service for a terminal user in a corresponding geographical coverage area.

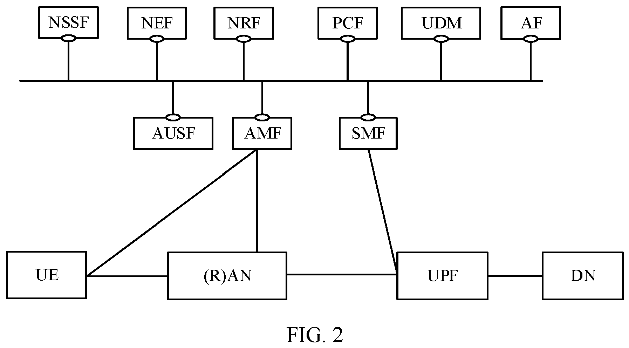

For another example, FIG. 2 is a diagram of an architecture of another communication system to which an embodiment of this application is applicable.

As shown in FIG. 2, for example, the communication system is a 5G system (5th generation system, 5GS). The network architecture may include three parts: a UE part, a data network (data network, DN) part, and an operator network part. The operator network may include one or more of the following network elements: a (radio) access network ((radio) access network, (R)AN) device, a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network repository function (network repository function, NRF) network element, a policy control function (policy control function, PCF) network element, a unified data management (unified data management, UDM) network element, and an application function (application function, AF) network element. In the foregoing operator network, parts other than the RAN part may be referred to as a core network part.

For descriptions of the terminal and the RAN, refer to the foregoing descriptions.

The UPF is mainly responsible for forwarding and receiving user data in the terminal. For example, the UPF may receive user plane data from the DN, and send the user plane data to the terminal via the access network device. The UPF may further receive user plane data from the terminal via the access network device, and forward the user plane data to the DN. A transmission resource and a scheduling function that are used by the UPF network element to provide a service for the terminal are managed and controlled by the SMF.

The DN is mainly used as an operator network that provides a data service for the terminal, for example, the Internet (Internet), a third-party service network, or an IP multi-media service (IP multi-media service, IMS) network.

The AUSF supports the 3rd generation partnership project (3rd generation partnership project, 3GPP) and non-3GPP access authentication.

The AMF is mainly responsible for signaling processing, for example, functions such as access control, mobility management, attachment and detachment, and gateway selection. When providing a service for a session in the terminal, the AMF provides a control plane storage resource for the session, to store a session identifier, an SMF network element identifier associated with the session identifier, and the like.

The SMF is mainly responsible for user plane network element selection, user plane network element redirection, Internet protocol (Internet protocol, IP) address assignment, bearer setup, modification, and release, quality of service (quality of service, QoS) control, and the like.

The NSSF is mainly responsible for network slice selection, and determines, based on slice selection assistance information, subscription information, and the like of the terminal, a network slice instance that the terminal is allowed to access.

The NEF mainly supports secure interaction between a 3GPP network and a third-party application.

The NRF is mainly used for storing a network function entity, description information of a service provided by the network function entity, and the like.

The PCF is mainly responsible for a policy control decision, provision of a policy rule of a control plane function, a traffic-based charging control function, and the like.

The UDM is mainly responsible for subscription data management of the terminal, including storage and management of a terminal identifier, access authorization of the terminal, and the like.

The AF mainly supports interacting with a 3GPP core network to provide a service, for example, affecting a data routing decision, a policy control function, or providing a third-party service for the network. The AF may be an AF deployed on the operator network, or may be a third-party AF.

In the network architecture shown in FIG. 2, the network elements may communicate with each other through interfaces. The interfaces between the network elements may be point-to-point interfaces, or may be service-based interfaces. This is not limited in this application.

The 5G access network supports a central or distributed architecture. The distributed architecture supports splitting of a CU (central processing unit/non-real-time processing) and a DU (distributed processing unit/real-time processing). The CU (central processing unit/non-real-time processing) has low requirements on real-time performance. Therefore, a virtualization technology and a universal processing platform can be used. The DU (distributed processing unit/real-time processing) has high requirements on real-time performance. Therefore, a dedicated hardware platform is used and high-density mathematical operations are supported. Packet data convergence protocol (Packet Data Convergence Protocol, PDCP) and radio resource control (radio resource control, RRC) layers that have low real-time requirements are processed in the CU, and a media access control (Media Access Control, MAC) layer, a radio link control (Radio Link Control, RLC) layer, and some processing functions at a physical layer are processed in the DU. A remaining part of processing functions at the physical layer may be moved down to an RRU (remote radio unit, remote radio unit), and the RRU and an antenna are combined into an AAU (active antenna processing unit, active antenna unit).

It should be understood that the functions or network elements such as the AMF, the SMF, the UPF, the PCF, the UDM, the AUSF, the NSSF, the NEF, the NRF, and the AF shown in FIG. 2 may be understood as network elements configured to implement different functions, and for example, may be combined into a network slice as required. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

It should be further understood that the network architectures shown in FIG. 1 and FIG. 2 are merely examples for description, and a network architecture applicable to embodiments of this application is not limited thereto. Any network architecture that can implement functions of the foregoing network elements is applicable to embodiments of this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

Currently, a wireless communication network supports a plurality of communication access technologies such as 5G NR, 4G LTE, a WLAN, and a fixed network, and terminal types are increasingly diversified, for example, a mobile phone, a VR device, a smart vehicle, an uncrewed aerial vehicle, and a smart water meter. Similar to 4G, a 5G system has two security layers. In other words, at a NAS and an access stratum (access stratum, AS), security mode commands are separately activated and security functions such as encryption and integrity protection are enabled. After the terminal and the network authenticate each other, the terminal and the network negotiate a security algorithm and a key used for encryption and integrity protection of RRC signaling, NAS signaling, and user data in a subsequent communication process. After negotiation of a NAS security algorithm is completed, encryption and integrity protection are performed on all NAS messages between the AMF and the UE. During AS security mode command interaction, the gNodeB and UE negotiate a key algorithm and a key for AS encryption and integrity protection, and enable encryption and integrity protection for AS RRC messages. Activation of AS user plane integrity protection and encryption is a part of a procedure of adding a data radio bearer (data radio bearer, DRB), and is performed through an RRC connection reconfiguration procedure.

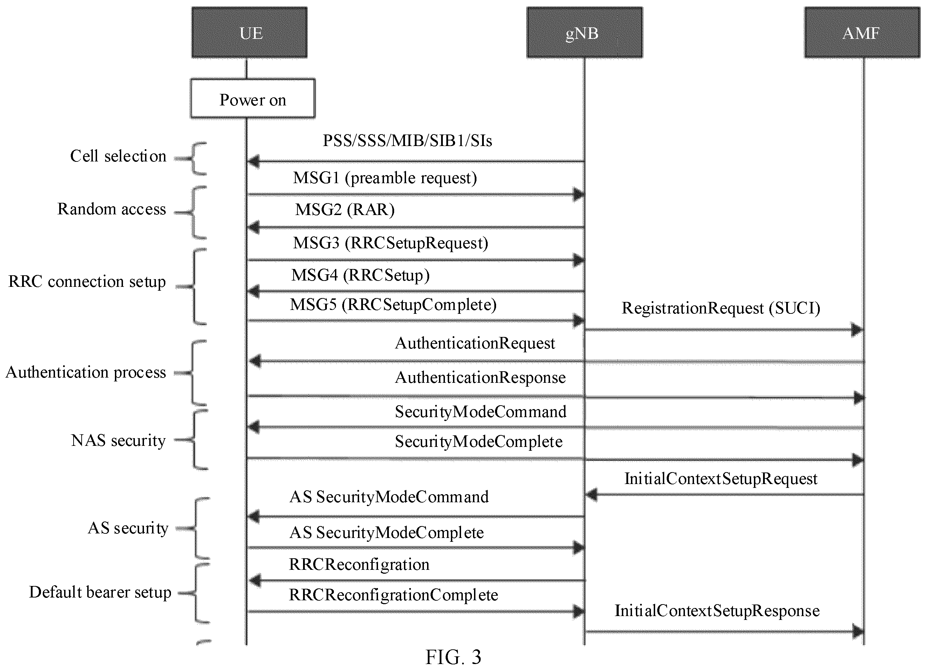

FIG. 3 is a diagram of signaling interaction between a terminal and a network in an initial access phase.

FIG. 3 shows a signaling interaction procedure between a terminal and a base station and a core network in an initial access phase. In the initial network access phase, the terminal selects a cell, and then performs random access to complete RRC connection setup. Then, the terminal and the network perform bidirectional identity authentication. After the authentication succeeds, key derivation and negotiation at a NAS and an AS are enabled. Before NAS security and AS security are set up, no security protection is provided for all air interface signaling, including RRC signaling and NAS signaling. After NAS security mode complete (NAS Security Mode Complete), encryption and integrity protection are enabled for the NAS signaling. After AS security mode complete (AS Security Mode Complete), encryption and integrity protection are enabled for the RRC signaling. After a DRB is set up through an RRC reconfiguration (RRC Reconfiguration) procedure, the base station and the terminal activate encryption and integrity protection for a corresponding user plane.

Based on the foregoing procedure, encryption and integrity protection can be enabled for the NAS signaling, the RRC signaling, and the user plane, but security protection is still not provided for signaling and data at a bottom layer (for example, a PDCP layer and protocol sublayers below the PDCP layer).

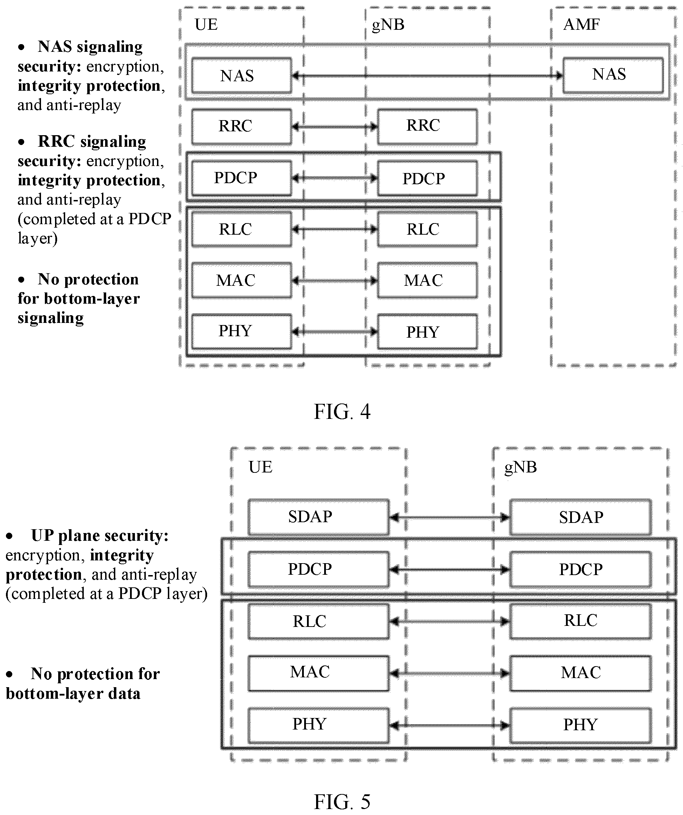

FIG. 4 is a diagram of a control plane (Control Plane, CP) protocol stack. All protocol stacks of the terminal are located in the terminal. On a network side, the NAS is not located on the base station gNB, but is located on an AMF entity in the core network. The control plane protocol stack relates to only security protection for the NAS signaling and the RRC signaling, including signaling encryption, integrity protection, anti-replay attacks, and the like. No security protection is provided for signaling at the bottom layer (for example, the PDCP layer and protocol sublayers below the PDCP layer).

FIG. 5 is a diagram of a user plane (User Plane, CP) protocol stack. Security processing such as encryption, integrity protection, and anti-replay of user plane data is completed at the PDCP layer, and no security protection is provided for the layers below the PDCP layer. In addition, calculation of a security algorithm for integrity protection in the current 3GPP standard is complex. To ensure performance of a QoS indicator like an aggregate maximum bit rate (Aggregate Maximum Bit Rate, AMBR), a plurality of operators do not enable user plane integrity protection at a PDCP layer in actual deployment.

In this case, no security protection is provided for signaling and data at protocol layers below the PDCP layer.

In new features such as short latency, high reliability, and energy saving of 5G, some key bottom-layer (for example, the PDCP layer and protocol sublayers below the PDCP layer) instructions that affect function usage or feature performance indicators appear, for example, downlink control information (downlink control information, DCI) and a MAC layer control element (Media Access Control layer Control Element, MAC CE). No security protection is provided for signaling and data at protocol layers below the PDCP layer, and consequently, an attacker may obtain and tamper with the bottom-layer instructions.

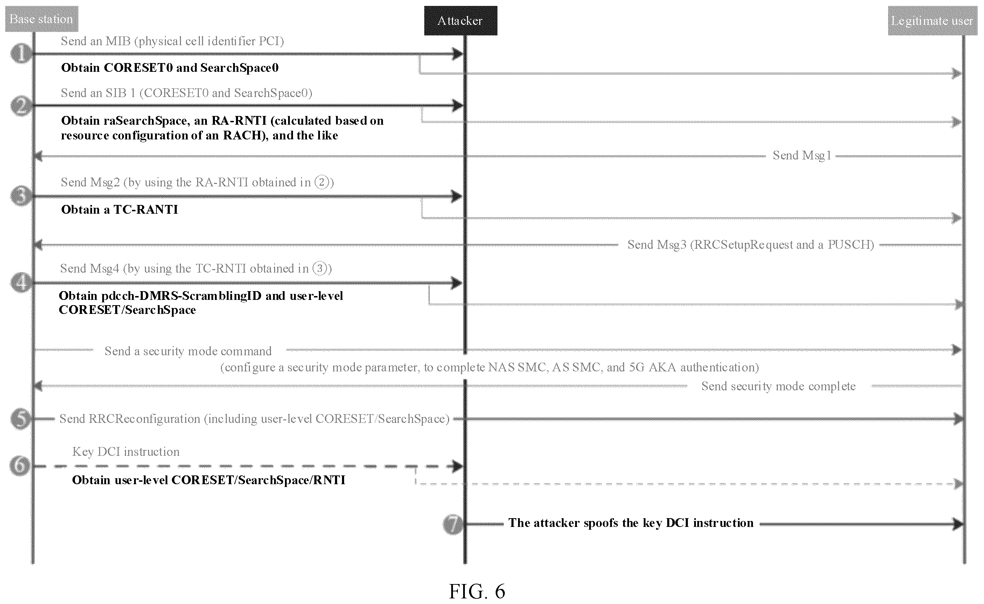

For example, FIG. 6 is a schematic flowchart in which an attacker obtains PDCCH resource configuration and a spoofing DCI instruction.

Step 1: The attacker listens, on a physical broadcast channel (physical broadcast channel, PBCH), to a master information block (master information block, MIB) sent by a legitimate base station, and obtains information element parameters: a control resource set (control resource set, CORESET) 0 and a search space (SearchSpace) 0 in the MIB.

Step 2: The attacker listens to DCI of a system information block (system information block, SIB) 1 on CORESET0 and SearchSpace0 of a PDCCH; obtains information such as a time-frequency resource location of the SIB 1; listens to the SIB 1 on a PDSCH channel; obtains an information element RACH-ConfigCommon that is in the SIB 1 and that indicates configuration such as a time-frequency resource/preamble/response window of a random access channel (random access channel, RACH); and calculates a possible value of a random access-radio network temporary identifier (random access-radio network temporary identifier, RA-RNTI) based on the parameters.

Step 3: The attacker listens to Msg2 based on the RA-RNTI, and obtains a TC-RNTI (Temporary C-RNTI) carried in the message Msg2.

Step 4: The attacker listens to Msg4 based on the TC-RNTI, and obtains a user-level parameter like CORESET/SearchSpace of a BWP 0 in the message Msg4. After contention-based random access of the UE succeeds, the TC-RNTI is upgraded to the C-RNTI. The attacker can obtain the C-RNTI allocated by the legitimate base station to the user through listening.

Step 5: The legitimate base station delivers an RRC reconfiguration message for encryption and integrity protection, to reconfigure a user-level information element parameter of each physical channel.

Although the attacker cannot obtain the information element parameter of each physical channel in the RRC reconfiguration message, the attacker can attempt to guess related information elements through decoding for a plurality of times. In addition, if most information elements delivered in encryption in RRC reconfiguration are the same as those in the plaintext Msg4, the attacker can easily crack and obtain related physical channel parameters with short time and little costs, and then spoof and tamper with bottom-layer signaling and data.

Step 6: The attacker continues to listen to a key DCI instruction delivered by the legitimate base station, performs blind detection for a plurality of times, and further guesses parameter configuration of the user-level CORESET and SearchSpace.

Step 7: Based on the parameters of the user-level CORESET and SearchSpace obtained in the foregoing step, the attacker spoofs or tampers with the key DCI instruction and sends the instruction to the user, which affects service functions or performance indicators of the user.

The attacker may spoof a PDCCH DCI format 1_0 scrambled by a P-RNTI in a paging occasion (Paging Occasion, PO). The DCI includes a short message, indicating that the system message SIB carried on the PDSCH is changed. The tampered system message can be used to further prohibit calling and called services of a legitimate terminal. The attacker may also spoof a DCI instruction of a PDCCH order based on the C-RNTI. Consequently, the legitimate terminal continuously initiates random access, and cannot obtain a normal network service. Alternatively, the terminal may listen to a DCI activation instruction, delivered by the legitimate base station, for a UL grant type 2, and obtain UE-specific parameters such as a CS-RNTI and the user-level CORESET/SearchSpace through a plurality of times of blind detection. Further, the attacker spoofs a DCI deactivation instruction and sends the DCI deactivation instruction to the terminal. Consequently, the user cannot use a configured grant-free resource, and the terminal cannot achieve a short-latency performance indicator.

In this case, the attacker may obtain, tamper with, or spoof bottom-layer signaling, which may cause the following problems, for example, legitimate terminal services are interrupted, terminal service performance degrades, power consumption of the terminal is abnormal, and resource scheduling of the base station is abnormal.

In a solution, physical layer encryption is performed on a MAC layer message, to prevent the attacker from obtaining and spoofing the information. Specifically, a first device (for example, user equipment or a base station) generates a scrambling key based on a private shared key or a latest parameter. The scrambling key may be used to scramble a valid payload before encoding in this solution. The solution may further include: scrambling the encoded valid payload, where the scrambling operation is binary bitwise XOR. The solution may also include: aggregating the valid payload into a K-bit sequence by using a K-bit aggregator (K is a natural number greater than or equal to 2), aggregating a scrambling sequence into an M-bit reordering index by using an M-bit aggregator (M is a natural number greater than K), and performing, based on the scrambling index obtained through M-bit aggregation, permutation and reordering on the valid payload sequence obtained through K-bit aggregation, to scramble the payload. The solution may further include: performing phase rotation or symbol negation on a constellation point modulated by quadrature phase shift keying (Quadrature Phase Shift Keying, QPSK) or quadrature amplitude modulation (Quadrature Amplitude Modulation, QAM) based on the aggregated scrambling key. The solution may further include: performing complex number multiplication on the modulated valid data and the modulated scrambling key. However, neither a specific method for generating a physical layer scrambling key nor how to specifically obtain a shared key or a latest parameter that is input by a key generator is described in this solution, and integrity protection cannot be provided for a physical layer payload.

In another solution, some bits of PDCCH order DCI may be encrypted based on a security parameter. The security parameter can be shared to the BS and UE via RRC signaling, a MAC CE, and DCI. The encrypted bits of the DCI information may be a random access preamble sequence index (Preamble Index) and a physical random access channel (Physical Random Access Channel, PRACH) PRACH mask index (mask index) in the PDCCH order DCI signaling. After the base station delivers the PDCCH order DCI on which security processing is processed, the attacker cannot obtain or spoof content of the DCI. However, this solution cannot be directly applied to other DCI or other bottom-layer signaling, and the solution does not describe a specific security parameter, a specific key generation operation, and a specific encryption operation.

Based on the foregoing content, this application provides a communication method and a communication apparatus, and physical layer integrity protection is introduced, to help improve security of signaling or data between a transmit end and a receive end.

The following describes the communication method provided in this application.

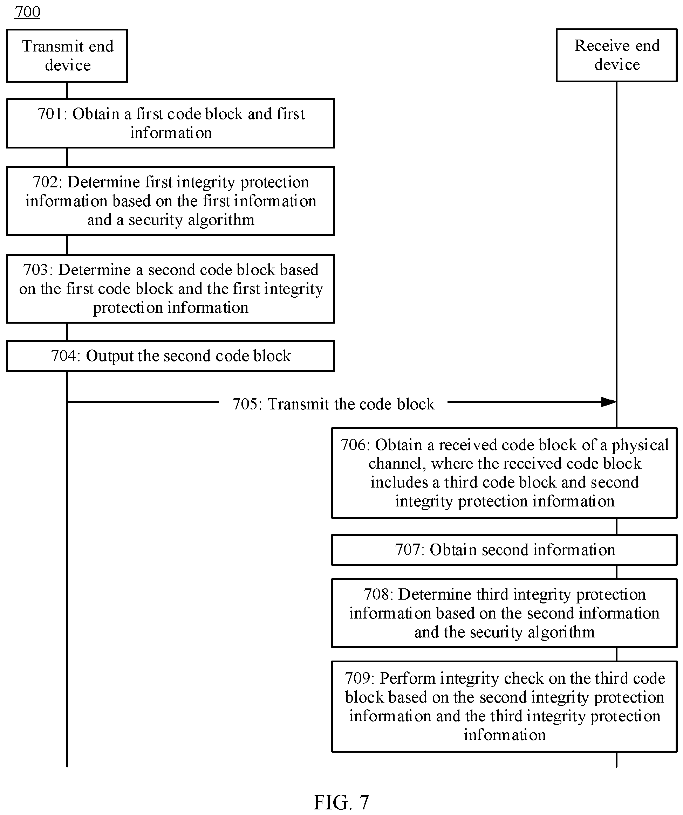

FIG. 7 is a schematic flowchart of a communication method 700 according to this application.

The method 700 may be performed at physical layers of a transmit end and a receive end. Optionally, the transmit end may be a terminal, and the receive end may be a network device (for example, the foregoing base station). Optionally, the transmit end may be a network device (for example, the foregoing base station), and the receive end may be a terminal. Optionally, both the transmit end and the receive end may be terminals. Optionally, both the transmit end and the receive end may be network devices (for example, the foregoing base station).

The method 700 includes at least a part of the following content.

Step 701: The transmit end obtains a first code block and first information.

The first code block is a payload of a physical channel. The physical channel may be any physical channel, for example, a physical uplink shared channel (physical uplink shared channel, PUSCH), a physical downlink shared channel (physical downlink shared channel, PDSCH), a physical uplink control channel (physical uplink control channel, PUCCH), or a physical downlink control channel (physical downlink control channel, PDCCH).

Optionally, when the physical channel is a PDCCH, the payload of the physical channel may be DCI. When the physical channel is a PUCCH, the payload of the physical channel may be uplink control information (uplink control information, UCI). When the physical channel is a PDSCH, the payload of the physical channel may be downlink data or DCI. When the physical channel is a PUSCH, the payload of the physical channel may be uplink data or UCI.

A manner in which the transmit end obtains the first code block is not specifically limited in this application.

In a possible implementation, that the transmit end obtains a first code block includes: The physical layer of the transmit end obtains the first code block from a MAC layer of the transmit end. For example, when the physical channel is a PDCCH or a PUCCH, the first code block may be a first code block obtained by the physical layer of the transmit end from the MAC layer of the transmit end.

In another possible implementation, that the transmit end obtains a first code block includes: The physical layer of the transmit end obtains a transport block (transport block, TB) from the MAC layer of the transmit end; calculates a check code of the transport block, and adds the obtained check code behind the transport block; and segments the transport block and the check code as a whole into one or more code blocks (code block, CB), where the first code block is one of the one or more code blocks.

The first information in this application is information used to calculate integrity protection information. In a possible implementation, the first information may include at least one of the following information: all or a part of the payload of the first code block, a first check code, an anti-replay parameter, a key, or downlink control information, and the downlink control information is used to schedule the first code block.

The first check code includes a check code of the first code block and/or a check code of a transport block to which the first code block belongs. For example, when the physical channel is a PDCCH or a PUCCH, the payload of the physical channel is small, and one transport block may be used for transmission. In this case, the first check code is the check code of the first code block or the check code of the transport block to which the first code block belongs, and the check code of the first code block is the check code of the transport block to which the first code block belongs. For another example, when the physical channel is a PDSCH or a PUSCH, the payload of the physical channel is large, and the payload of the physical channel may need to be segmented into a plurality of code blocks for transmission, that is, the transport block is segmented into the plurality of code blocks for transmission. The plurality of code blocks include the first code block. In this case, the first check code may be the check code of the transport block and the check code of the first code block, the check code of the transport block, or the check code of the first code block. The check code of the first code block may be understood as a check code obtained through calculation based on the first code block, or a check code used to perform error detection on the first code block. Similarly, the check code of the transport block to which the first code block belongs may be understood as a check code obtained through calculation based on the transport block to which the first code block belongs, or a check code used to perform error detection on the transport block to which the first code block belongs. A manner of generating the check code is not specifically limited in this application. For example, the check code in this application may be a cyclic redundancy check (Cyclic redundancy check, CRC) code.

The anti-replay parameter may include a cell-level parameter and/or a configuration parameter of the physical channel.

The cell-level parameter includes at least one of the following parameters: a physical cell identifier, a frequency or a frequency point of a link, system bandwidth, or BWP information.

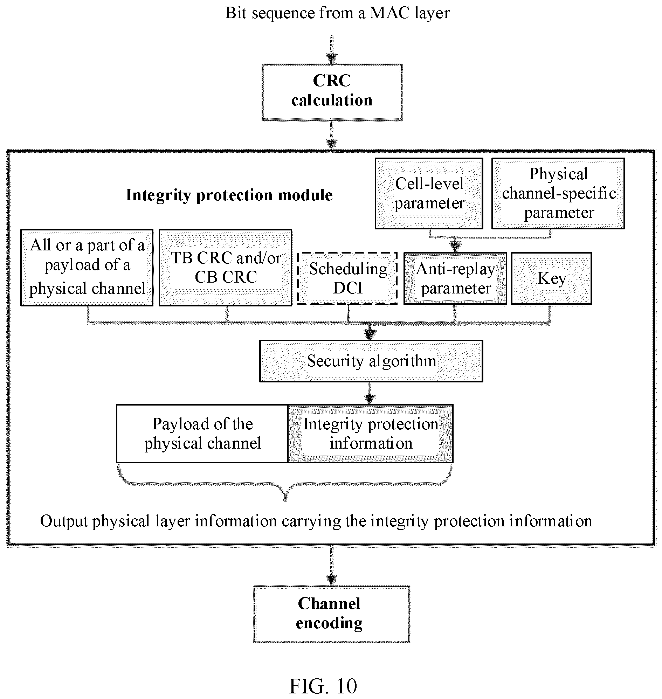

The configuration parameter of the physical channel includes an information element parameter of the physical channel and/or another parameter related to transmission of the physical channel that are/is delivered via higher layer signaling (for example, RRC signaling). For example, the configuration parameter of the physical channel includes at least one of the following parameters: a time domain parameter, a frequency domain parameter, a sequence generation parameter, a transmit power control parameter, or an encoding parameter. For more detailed descriptions of the parameters, refer to the following descriptions in FIG. 10 to FIG. 15.

The key may be a key between the base station and a user, and different keys are used for different users. The key may be a physical layer key derived from a base station key K_gNB based on a derivation method of an RRC integrity protection key K_RRCint, or may be a physical layer key derived from a channel entropy shared by the base station and the terminal in an air interface environment. The key may be shared by all the foregoing physical channels, or each physical channel may correspond to a different key.

The downlink control information may also be referred to as scheduling DCI. When the physical channel is a PUSCH or a PDSCH, the first information may include the downlink control information.

Optionally, when the first information includes the part of the payload of the first code block, the method 700 further includes: obtaining the part of the payload of the first code block based on a first offset and a first length, where the first offset is an offset of a start location of the part of the payload of the first code block relative to a start location of the first code block, and the first length is a length of the part of the payload of the first code block. When the offset is 0, the start location of the part of the payload of the first code block is the same as the start location of the first code block.

Optionally, when the first information includes the part of the payload of the first code block, the method 700 further includes: segmenting the first code block into a plurality of code subblocks based on segmentation information, and obtaining a partial payload of each of the plurality of code subblocks based on a second offset and a second length, where the part of the payload of the first code block includes the partial payload of each code subblock, the second offset is an offset of a start location of the partial payload of each code subblock relative to a start location of the code subblock, and the second length is a length of the partial payload of each code subblock. The segmentation information may be a length of the code subblock or a number of code subblocks.

The first offset, the first length, the segmentation information, the second offset, and the second length may be carried in the downlink control information.

Step 702: The transmit end determines first integrity protection information based on the first information and a security algorithm.

The first integrity protection information is used to perform integrity protection on the first code block.

Specifically, the transmit end uses the first information as input information of the security algorithm, and obtains the first integrity protection information through calculation.

The security algorithm is not specifically limited in this application. For example, the security algorithm may be an integrity protection algorithm that is based on a symmetric key. For example, the security algorithm includes at least one of the following integrity protection algorithms: SNOW 3G, SNOW V, AES-CMAC, Zu Chongzhi ZUC, HMAC-SHA2, or HMAC-SHA3.

Step 703: The transmit end determines a second code block based on the first code block and the first integrity protection information.

The second code block includes the first code block and the first integrity protection information.

In a possible implementation, the transmit end attaches the first integrity protection information to the first code block to which the check code has been added. In other words, the second code block includes the first code block, the check code of the first code block, and the first integrity protection information.

In another possible implementation, the transmit end replaces the check code of the first code block with the first integrity protection information, and attaches the first integrity protection information to the first code block, that is, the second code block includes the first code block and the first integrity protection information, but does not include the check code of the first code block.

Step 704: The transmit end outputs the second code block.

Subsequently, the transmit end may further perform operations such as encoding, rate matching, scrambling, QAM modulation, and resource mapping on the second code block. For more detailed descriptions, refer to the conventional technology. Details are not described herein.

Step 705: Perform radio air interface transmission between the transmit end and the receive end.

Step 706: The receive end obtains a received code block of the physical channel.

The received code block includes a third code block and second integrity protection information.

Specifically, the receive end receives a signal through radio air interface transmission, and performs operations such as demapping, channel estimation, QAM demodulation, descrambling, de-rate matching, and decoding on the received signal, to obtain the third code block. For more detailed descriptions, refer to the conventional technology. Details are not described herein.

It should be noted that the received code block may be the same as or different from the second code block in step 704. For example, if the second code block is not tampered with or spoofed in the transmission process, the received code block is the same as the second code block in step 704. In this case, integrity check shown in the following steps 707 to 709 succeeds. For another example, if the second code block is tampered with or spoofed in the transmission process, the received code block is different from the second code block in step 704. In this case, integrity check shown in the following steps 707 to 709 fails.

Step 707: The receive end obtains second information.

The second information includes at least one of the following information: all or a part of a payload of the third code block, a second check code, an anti-replay parameter, a key, or downlink control information.

The second check code is obtained through calculation based on the third code block in the received code block. The second check code includes a check code of the third code block and/or a check code of a transport block to which the third code block belongs. For example, when the physical channel is a PDCCH or a PUCCH, the payload of the physical channel is small, and one transport block may be used for transmission. In this case, the second check code is the check code of the third code block or the check code of the transport block to which the third code block belongs, and the check code of the third code block is the check code of the transport block to which the third code block belongs. For another example, when the physical channel is a PDSCH or a PUSCH, the payload of the physical channel is large, and the payload of the physical channel may need to be segmented into a plurality of code blocks for transmission, that is, the transport block is segmented into the plurality of code blocks for transmission. In this case, the second check code may be the check code of the transport block and the check code of the third code block, the check code of the transport block, or the check code of the third code block. The check code of the third code block may be understood as a check code obtained through calculation based on the third code block, or a check code used to perform error detection on the third code block. Similarly, the check code of the transport block to which the third code block belongs may be understood as a check code obtained through calculation based on the transport block to which the third code block belongs, or a check code used to perform error detection on the transport block to which the third code block belongs. A manner of generating the check code is not specifically limited in this application. For example, the check code in this application may be a cyclic redundancy check code.

It should be noted that the first check code of the transmit end and the second check code of the receive end need to be calculated in a same manner.

The anti-replay parameter, the key, and the downlink control information used by the receive end are the same as the anti-replay parameter, the key, and the downlink control information used by the transmit end. These parameters may be pre-configured, or may be negotiated by the transmit end and the receive end via signaling, or may be generated by the transmit end and the receive end in a same generation manner.

Optionally, when the second information includes the part of the payload of the third code block, the method 700 further includes: obtaining the part of the payload of the third code block based on a first offset and a first length, where the first offset is an offset of a start location of the part of the payload of the third code block relative to a start location of the third code block, and the first length is a length of the part of the payload of the third code block.

Optionally, when the second information includes the part of the payload of the third code block, the method 700 further includes: segmenting the third code block into a plurality of code subblocks based on segmentation information, and obtaining a partial payload of each of the plurality of code subblocks based on a second offset and a second length, where the part of the payload of the third code block includes the partial payload of each code subblock, the second offset is an offset of a start location of the partial payload of each code subblock relative to a start location of the code subblock, and the second length is a length of the partial payload of each code subblock. The segmentation information may be a length of the code subblock or a number of code subblocks. In a possible implementation, second offsets corresponding to the code subblocks may be the same or different, or second lengths corresponding to the code subblocks may be the same or different.

It should be noted that the first offset, the first length, the segmentation information, the second offset, and the second length used by the receive end are the same as the first offset, the first length, the segmentation information, the second offset, and the second length used by the transmit end. These parameters may be pre-configured, or may be negotiated by the transmit end and the receive end via signaling.

Step 708: The receive end determines third integrity protection information based on the second information and a security algorithm.

Specifically, the receive end uses the second information as input information of the security algorithm, and obtains the third integrity protection information through calculation.

It should be noted that the security algorithm used by the receive end is the same as the security algorithm used by the transmit end. The security algorithm may be pre-configured, or may be negotiated by the transmit end and the receive end via signaling.

Step 709: Perform integrity check on the third code block based on the second integrity protection information and the third integrity protection information.

Specifically, when the second integrity protection information is the same as the third integrity protection information, integrity check of the third code block succeeds. When the second integrity protection information is different from the third integrity protection information, integrity check of the third code block fails.

Therefore, according to the method 700, physical layer integrity protection may be implemented, and security of signaling or data between the transmit end and the receive end is improved. When the check code is used as an input of the security algorithm, an error detection function of the check code can be fully used. In addition, when the check code includes the check code of the transport block to which the code block belongs, because the check code of the transport block to which the code block belongs is obtained through calculation based on the transport block, integrity protection can be provided for all of the payload of the physical channel to some extent. When the downlink control information is used as an input of the security algorithm, an association relationship between DCI of the PDCCH and the PDSCH or the PUSCH may be used, to further improve attack difficulty. When the cell-level parameter and the configuration parameter of the physical channel are used as an input of the security algorithm, an anti-replay capability may be provided, for example, to prevent an attacker from performing encoding in other time frequency, frequency domain, or spatial domain or based on another parameter and from replaying signaling or data.

This application further provides a method for activating a physical layer integrity protection mechanism. In the method, a transmit end and a receive end may activate the physical layer integrity protection mechanism after an access stratum security protection mode is completed.

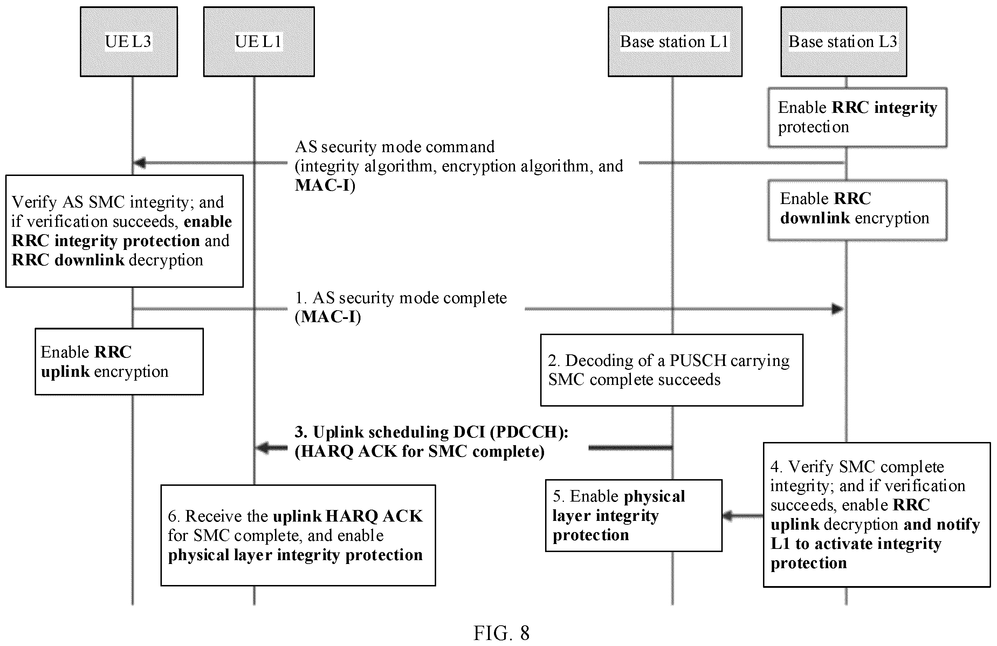

FIG. 8 is a schematic flowchart of a method for activating a physical layer integrity protection mechanism.

In FIG. 8, communication between UE and a base station is used as an example.

L3 of the base station starts RRC integrity protection.

Step 1: L3 (that is, an RRC layer) of the UE sends an RRC message (namely, an SMC complete (Security Mode Complete) message), where the RRC message carries RRC layer integrity protection information.

Step 2: L1 (namely, the physical layer) of the base station decodes a PUSCH that carries the SMC complete message.

Step 3: If decoding of the PUSCH succeeds, L1 of the base station delivers DCI, where the DCI indicates an uplink hybrid automatic repeat request (Hybrid Automatic Repeat Request, HARQ) acknowledgment (Acknowledgment, ACK); or if decoding of the PUSCH fails, L1 of the base station delivers DCI, where the DCI indicates an uplink HARQ negative acknowledgment (Negative Acknowledgment, NACK).

Step 4: L3 of the base station checks integrity of the SMC complete message.

If the integrity check of the SMC completion message succeeds, L3 of the base station notifies L1 of the base station to enable "physical layer integrity protection", that is, activate a physical layer integrity protection mechanism.

For example, after the physical layer integrity protection mechanism is activated, integrity protection information may be added to a payload of a physical channel when the payload of the physical channel is sent. For example, the integrity protection information is added to the payload of the physical channel in the manner shown in the method 700. It should be noted that after the physical layer integrity protection mechanism is activated, subsequent operations performed at a physical layer are not limited to the implementations shown in the method 700.

Step 5: L1 of the base station enables the physical layer integrity protection mechanism.

Step 6: After receiving the uplink HARQ ACK for the SMC complete message, L1 of the UE enables the physical layer integrity protection mechanism.

It should be noted that, before step 1, another step of AS security setup may be further performed. For detailed descriptions, refer to the conventional technology.

It should be further noted that the method shown in FIG. 8 may be separately implemented, or may be implemented together with another embodiment of this application. For example, the method shown in FIG. 8 may be combined with the method 700, that is, the method shown in FIG. 8 may be performed before the method 700.

This application further provides a method for updating a physical layer integrity protection parameter. In the method, a transmit end and a receive end may update the physical layer integrity protection parameter after radio link control reconfiguration is completed.

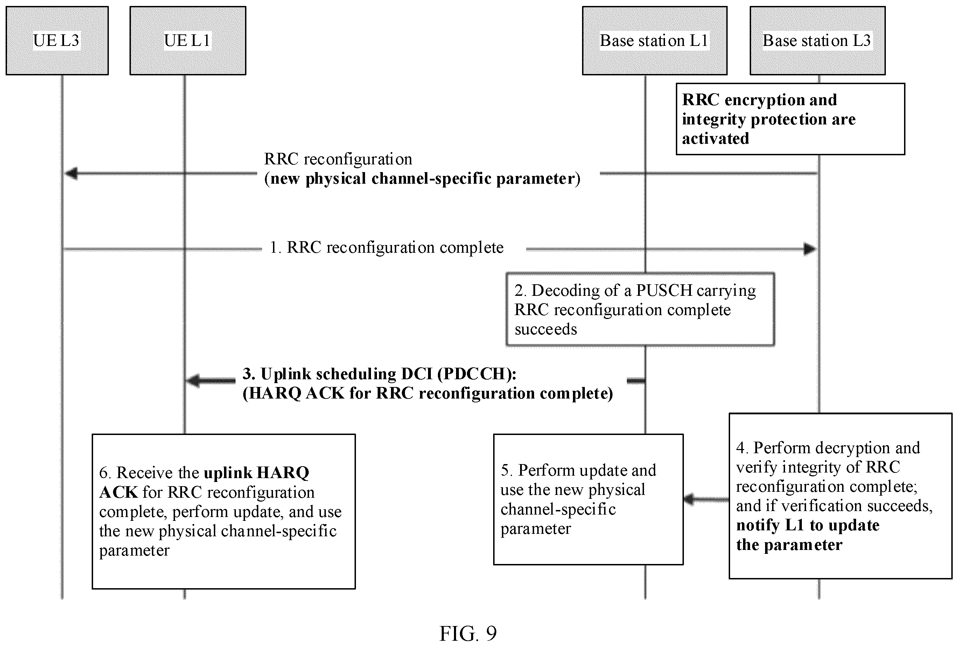

FIG. 9 is a schematic flowchart of a method for updating a physical layer integrity protection parameter.

In FIG. 9, communication between UE and a base station is used as an example.

Step 1: L3 of the UE sends an RRC reconfiguration complete (RRC Reconfiguration Complete) message, where the message is encrypted and provided with integrity protection.

Step 2: L1 of the base station decodes a PUSCH that carries the RRC reconfiguration complete.

Step 3: If decoding of the PUSCH succeeds, L1 of the base station delivers DCI, where the DCI indicates an uplink HARQ ACK; or if decoding of the PUSCH fails, L1 of the base station delivers DCI, where the DCI indicates an uplink HARQ NACK.

Step 4: L3 of the base station performs decryption and checks integrity of the RRC reconfiguration complete message.

If integrity check of the RRC reconfiguration complete message succeeds, L3 of the base station notifies L1 of the base station to update a configuration parameter of a physical channel. The configuration parameter of the physical channel may also be described as a physical channel-specific parameter. For more detailed description, refer to the method 700. Details are not described herein again.

Step 5: L1 of the base station performs update and uses a new configuration parameter of the physical channel.

Step 6: L1 of the UE receives the uplink HARQ ACK for the RRC reconfiguration complete message, performs update, and uses a new configuration parameter of the physical channel.

It should be noted that, before step 1, another step of RRC reconfiguration may be further performed. For detailed descriptions, refer to the conventional technology.

It should be further noted that the method shown in FIG. 9 may be separately implemented, or may be implemented together with another embodiment of this application. For example, the method shown in FIG. 9 may be combined with the method 700 and/or the method shown in FIG. 8.

The following describes the communication method in this application with reference to a specific scenario. In the following, the physical channel-specific parameter may correspond to the foregoing configuration parameter of the physical channel.

### Embodiment 1

FIG. 10 is an overall diagram of a communication method according to this application. A transmit end is used as an example in FIG. 10.

After an AS access stratum security mode is activated, the communication method provided in this application is applied, the transmit end may use, as an input of the security algorithm, at least one of all or a part of a bit string of transmission information of a physical channel, a CRC check code of a TB, a CRC check code of a CB, scheduling DCI information, an anti-replay parameter like a cell-level parameter and a physical channel-specific parameter, and a physical layer key, to generate integrity protection information. The CRC check code is replaced with the integrity protection information, and the integrity protection information is attached to the payload of the physical layer, to perform integrity protection on the transmission information of the physical channel.
1. The physical channel may be a physical channel like a PDCCH, a PDSCH, a PUCCH, or a PUSCH.

In a possible implementation, for the PDCCH and the PUCCH, all payloads may be used as an input of a security algorithm for integrity protection.

In a possible implementation, for the PDSCH and the PUSCH, segmentation is performed based on a length of a transmission payload, and a truncated part of the bit string is used as an input of the security algorithm. Optionally, parameters such as a segmentation length, a truncating length, and a start offset may be delivered in the scheduling DCI.

In a possible implementation, for the PDCCH and the PUCCH, the CRC check code is the CRC check code of the transport block TB. For the PDSCH and the PUSCH, the CRC check code may be the CRC check code of the TB and/or the CRC check code of the CB.

In a possible implementation, for the PDSCH and the PUSCH, payload (payload) information of the scheduling DCI (or carried by the PDCCH) corresponding to the PDSCH and the PUSCH may be used as an input of the security algorithm for integrity protection of the PDSCH and the PUSCH.

In a possible implementation, the anti-replay parameter may include the cell-level parameter and the physical channel-specific parameter.

Specifically, the anti-replay parameter may include an information element parameter, of the physical channel, that is encrypted and delivered via higher layer RRC signaling, and/or another parameter, of the physical channel, related to transmission at the physical layer.

The cell-level parameter may include at least one of a physical cell ID, a downlink frequency point, an uplink frequency point, system bandwidth, BWP information, and the like.

The physical channel-specific parameter may include at least one of a time domain parameter, a frequency domain parameter, a spatial domain parameter, a sequence generation parameter, or an encoding parameter that is related to transport block processing performed on the physical channel.

The time domain parameter includes at least one of a system frame number, a slot (slot), a symbol start location, and a number of symbols. The frequency domain parameter includes at least one of a start RB, a number of occupied RBs, and frequency hopping information. The spatial domain parameter includes a number of antenna ports or a number of scheduled streams.

The sequence generation parameter includes parameters for generating a bit scrambling sequence and a demodulation reference signal (Demodulation Reference Signal, DMRS) sequence, a DMRS port number, and the like.

The encoding parameter includes interleaving information, a precoding granularity, a modulation and coding scheme (Modulation and Coding Scheme, MCS), HARQ information, and the like.

The key may also be referred to as a physical layer key, and a granularity of the key may be shared by all physical channels, or may be different for each physical channel. For example, the physical layer key may be a physical layer key derived from a base station key K_gNB based on a derivation method of an RRC integrity protection key K_RRCint, or may be a physical layer key derived from a channel entropy shared by the base station and the terminal in an air interface environment.

The following describes physical layer integrity protection of different channels with reference to Embodiment 2 to Embodiment 4.

### Embodiment 2

This embodiment provides a physical layer integrity protection method for a PDCCH. DCI may correspond to the first code block.

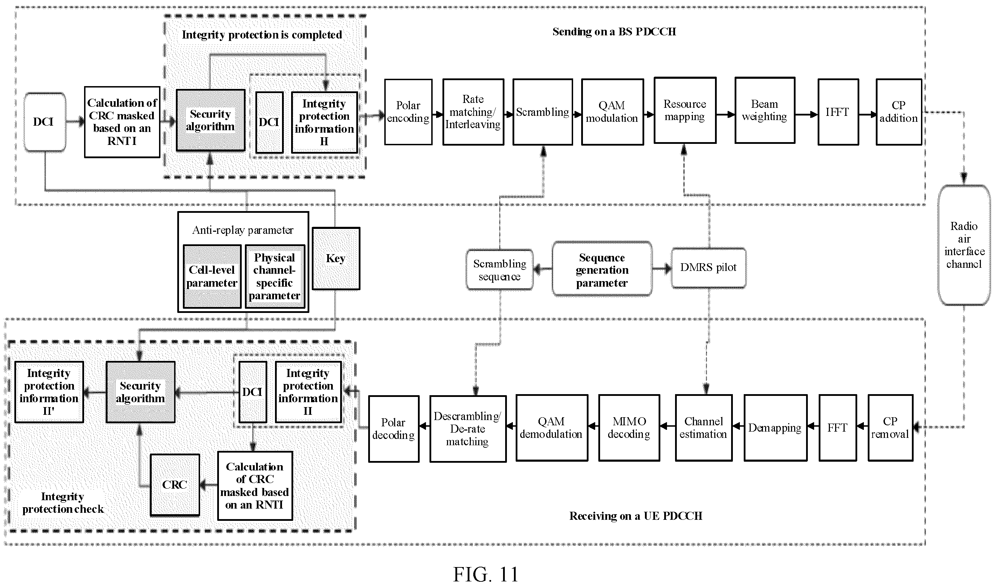

FIG. 11 is a diagram of an integrity protection mechanism of DCI for scheduling one transport block on a physical channel PDCCH in one transmission slot. The upper part of FIG. 11 corresponds to sending-related processing on the PDCCH on a base station side, and the lower part corresponds to receiving-related processing on the PDCCH on a UE side.

Specifically, the base station side first calculates, according to an existing procedure in the 3GPP standard TS 38.212, a CRC check code of the TB scheduled by the DCI, then masks, through a bitwise XOR operation, last 16 bits of the TB CRC and an RNTI corresponding to the DCI, and uses, as an input of an integrity protection generation algorithm, the TB CRC that is masked based on the RNTI. The base station uses all of a DCI payload of the PDCCH, the TB CRC, an anti-replay parameter, and a physical layer key as an input of a PDCCH integrity protection algorithm (namely, a security algorithm), to generate integrity protection information H. The base station replaces the TB CRC with the integrity protection information H, and attaches the integrity protection information H after the transport block DCI as an input of polar encoding. The anti-replay parameter includes a cell-level parameter and a PDCCH-specific parameter.

The UE calculates, based on an output result of polar decoding, TB CRC corresponding to DCI obtained through decoding, and uses the DCI obtained through decoding by the receiver, the TB CRC calculated by the receiver, the anti-replay parameter, and the physical layer key as an input of the PDCCH integrity protection algorithm, to generate integrity protection information H'. The UE compares the received integrity protection information H with the integrity protection information H' obtained through calculation by the UE, to complete physical layer integrity protection check. If H is the same as H', PDCCH DCI integrity protection check succeeds. Otherwise, DCI integrity check fails.

For other operations in the figure, refer to the conventional technology. Details are not described herein.

The following describes the input parameters of the security algorithm.

### 1. Anti-replay parameter

The anti-replay parameter may include the cell-level parameter and the PDCCH-specific parameter, and may specifically include a PDCCH information element parameter encrypted and delivered via higher layer RRC signaling, and/or another parameter related to transmission of PDCCH DCI at a physical layer, and the like. The anti-replay (anti-replay) parameters may be used as the input of the security algorithm to prevent or alleviate replay attacks. The anti-replay parameters include but are not limited to the following information:
I. The cell-level parameter includes a physical cell ID, a downlink frequency ARFCN, system bandwidth, BWP information, and the like.
II. The PDCCH-specific parameter may be a time domain parameter, a frequency domain parameter, a sequence generation parameter, encoding information, or the like that is related to transport block processing performed on the PDCCH.

(1) The time domain parameter includes at least one of the following: a system frame number, a slot slot, a time domain-related parameter (for example, a monitoring periodicity and a slot offset: monitoringSlotPeriodicity AndOffset; and a number of monitoring slots: duration) in an information element SearchSpace, and a time domain-related parameter (for example, a PDCCH start symbol: monitoringSymbolsWithSlot; and a number of PDCCH symbols: duration) in an information element CORESET.
(2) The frequency domain parameter includes at least one of the following: a CORESET frequency domain resource (for example, an information element frequencyDomainResources), a CCE aggregation level and a number of candidate sets (for example, aggregationLevel and nrofCandidates in the information element SearchSpace), and a start CCE index.
(3) The sequence generation parameter includes at least one of the following: a parameter (for example, pdcch-DMRS-ScramblingID in the information element CORESET) used to generate a PDCCH scrambling sequence and a DMRS sequence.
(4) The encoding information includes at least one of the following: a CCE-to-REG mapping manner (for example, cce-REG-MappingType in the information element CORESET), an interleaving block size (reg-Bundle Size), an interleaving depth (interleaverSize), a REG interleaving shift index (shiftIndex), and a precoding granularity (precoderGranularity).

The higher layer configuration parameters related to the PDCCH are in the information elements: CORESET and SearchSpace. The two information elements may be delivered by the base station to the UE via RRCSetup or RRCReconfiguration signaling. The RRC reconfiguration signaling is encrypted and provided with integrity protection.

### 2. Security algorithm

A known integrity protection algorithm that is based on a symmetric key may be used as the security algorithm. This is not limited herein.

Optionally, an integrity protection algorithm like SNOW 3G, SNOW V, AES-CMAC, or Zu Chongzhi ZUC used at a PDCP layer in a 4G or 5G standard may be used.

Optionally, an integrity protection algorithm like HMAC-SHA2 or HMAC-SHA3 may be used, and an HMAC hash-based message authentication code (Hash-based Message Authentication Code) is a message authentication code based on a hash operation. SHA2 and SHA-3 (Secure Hash Algorithm 3) are different secure hash (hash) algorithms. Based on a shared symmetric key, the HMAC can use any iterative hash function that may be used for encryption.

In this embodiment, an output result of the security algorithm may be completely used as physical layer integrity protection information; or an output result of the security algorithm may be truncated, and a part of the output result is used as physical layer integrity protection information. Then, the physical layer integrity protection information is used to replace a CRC bit string and is attached to the transport block.

### Embodiment 3

This embodiment provides a physical layer integrity protection method for a PUCCH. UCI may correspond to the first code block.

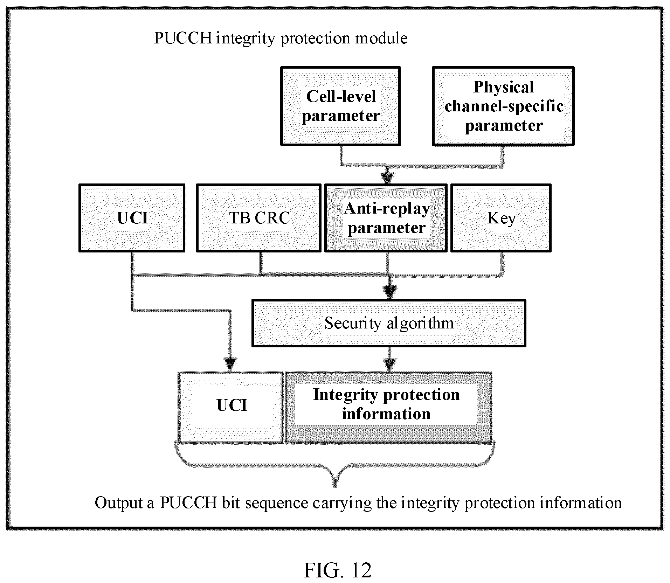

FIG. 12 is a diagram of a physical layer integrity protection method for a PUCCH.

A transmitter (namely, UE) uses all of a UCI payload of the PUCCH, TB CRC, an anti-replay parameter, and a physical layer key as an input of a PUCCH integrity protection algorithm, to generate integrity protection information H; and replaces the TB CRC with the integrity protection information H, and attaches the integrity protection information H to a transport block scheduled by the UCI as an input of polar encoding.

A receiver (namely, a base station) calculates, based on an output result of polar decoding, TB CRC corresponding to UCI obtained through decoding, and uses the UCI obtained through decoding by the receiver, the TB CRC calculated by the receiver, the anti-replay parameter, and the physical layer key as an input of the PUCCH integrity protection algorithm (namely, a security algorithm), to generate integrity protection information H'. The receiver compares the received integrity protection information H with the integrity protection information H' obtained through calculation by the receiver, to complete physical layer integrity protection check. If H is the same as H', PUCCH UCI integrity protection check succeeds. Otherwise, UCI integrity check fails.

For another operation for the transport block scheduled by the UCI, refer to FIG. 11. Details are not described herein again.

The following describes the input parameters of the security algorithm.

### 1. Anti-replay parameter

The anti-replay parameter may include the cell-level parameter and the PUCCH-specific parameter, and may specifically include a PUCCH information element parameter encrypted and delivered via higher layer RRC signaling, and/or another parameter related to transmission of PUCCH UCI at a physical layer, and the like. The anti-replay (anti-replay) parameters may be used as the input of the security algorithm to prevent or alleviate replay attacks.

The cell-level parameter includes at least one of the following information: a physical cell ID, an uplink center frequency point, system bandwidth, BWP information, and the like.

The PUCCH-specific parameter may be a time domain parameter, a frequency domain parameter, a sequence generation parameter, an encoding parameter, or another parameter that is related to transport block processing performed on the PUCCH.
(1) The time domain parameter includes at least one of the following information: a system frame number, a slot slot, and a number nrofSymbols of symbols and a start symbol index startingSymbolIndex in an information element PUCCH-Config.
(2) The frequency domain parameter includes at least one of the following information: a number nrofPRBs of PRBs in the information element PUCCH-Config, a frequency domain start location startingPRB of a resource set, and an index secondHopPRB of a second PRB after frequency hopping of a PUCCH.
(3) The sequence generation parameter includes at least one of the following information: an additional DMRS pilot parameter additionalDMRS, a sequence group and sequence hopping parameter pucch-GroupHopping for a PUCCH, and hoppingId.
(4) The encoding parameter includes at least one of the following information: a PUCCH format, OCC information (occ-Index and occ-Length) of a format 4, a maximum code rate (maxCodeRate) of UCI, and intra-slot frequency hopping (intraSlotFrequencyHopping).
(5) Another parameter includes a transmit power control parameter (p0-nominal).

The higher layer configuration parameters related to the PUCCH are in the information element PUCCH-Config. The information element may be delivered by the base station to the UE via RRCSetup or RRCReconfiguration signaling. The RRC reconfiguration signaling is encrypted and provided with integrity protection.

### 2. Security algorithm

A known integrity protection algorithm that is based on a symmetric key may be used as the security algorithm. This is not limited herein.

Optionally, an integrity protection algorithm like SNOW 3G, SNOW V, AES-CMAC, or Zu Chongzhi ZUC used at a PDCP layer in a 4G or 5G standard may be used.

Optionally, an integrity protection algorithm like HMAC-SHA2 or HMAC-SHA3 may be used, and an HMAC hash-based message authentication code (Hash-based Message Authentication Code) is a message authentication code based on a hash operation. Based on a shared symmetric key, the HMAC can use any iterative hash function that may be used for encryption.

In this embodiment, an output result of the security algorithm may be completely used as physical layer integrity protection information; or an output result of the security algorithm may be truncated, and a part of the output result is used as physical layer integrity protection information. Then, the physical layer integrity protection information is used to replace a CRC bit string and is attached to the transport block.

### Embodiment 4

This embodiment provides a physical layer integrity protection method for a PDSCH or a PUSCH. Data carried in the PDSCH or the PUSCH may correspond to the first code block.

The PDSCH is a physical downlink shared channel, and is used to carry data from a transport channel (downlink shared channel, DSCH). The data specifically includes downlink information such as downlink user data, NAS signaling, RRC signaling, and a MAC CE.

The PUSCH is a physical uplink shared channel, and is used to carry data from a transport channel (uplink shared channel, USCH). The data specifically includes uplink information such as uplink user data, NAS signaling, RRC signaling, an L2 MAC CE, and L1 UCI (the uplink control information UCI may be sent on the PUSCH; or if there is no PUSCH, the UCI may be sent on the PUCCH).

A calculation processing process of the PDSCH is similar to that of the PUSCH at a physical layer, and similar physical layer integrity protection methods may also be used for the PDSCH and the PUSCH. However, physical channel-specific parameters of the PDSCH and the PUSCH are different, and anti-replay parameters used for physical layer integrity protection of the two channels are different.

In an existing standard, if a length of a transport block TB is large, a plurality of code blocks CBs are formed through segmentation according to a specific rule. In other words, one TB includes one or more CBs.

The following uses the PDSCH integrity protection method as an example for description. For the PUSCH integrity protection method, refer to the PDSCH integrity protection method. Details are not described.

A transmitter (namely, a base station) uses at least one of all or a part of a payload of a code block CB of the PDSCH, CB CRC, TB CRC, downlink scheduling DCI, an anti-replay parameter, and a physical layer key as an input of a PDSCH integrity protection algorithm (security algorithm), to generate integrity protection information H; and replaces the CB CRC with the integrity protection information H and attaches the integrity protection information H to the code block CB, and/or replaces the TB CRC with the integrity protection information H and attaches the integrity protection information H to a transport block TB, and finally uses a combination as an input for LDPC encoding.

A receiver (namely, UE) calculates, based on an output result of LDPC decoding, TB CRC or CB CRC corresponding to a TB or a CB obtained through decoding, and uses all or a part of a payload of a CB obtained through decoding, CB CRC calculated by the receiver, TB CRC calculated by the receiver, downlink scheduling DCI, an anti-replay parameter, and/or a physical layer key as an input of the PDSCH integrity protection algorithm, to generate integrity protection information H'. The receiver compares the received integrity protection information H with the integrity protection information H' obtained through calculation by the receiver, to complete physical layer integrity protection check. If H is the same as H', PDSCH TB and/or CB integrity protection check succeeds. Otherwise, integrity check fails.

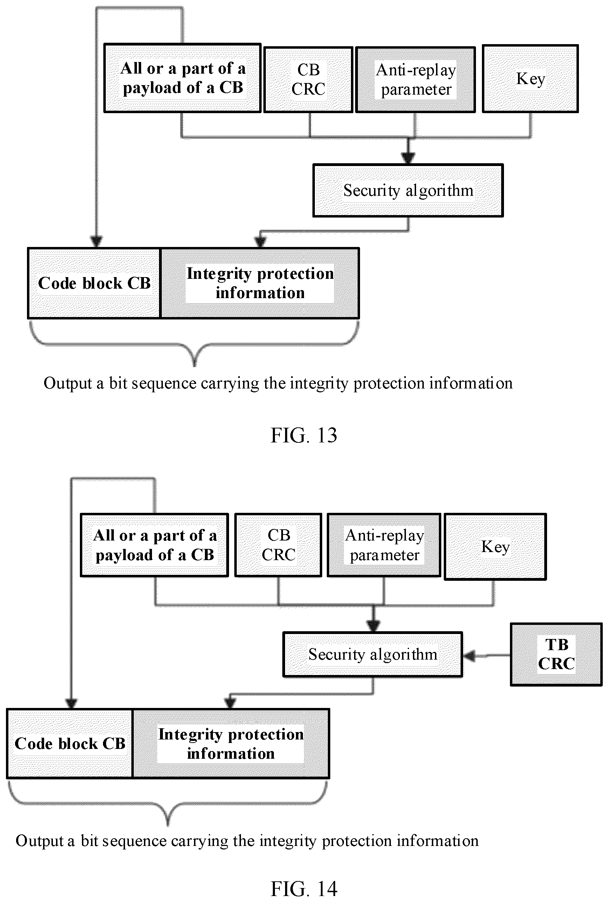

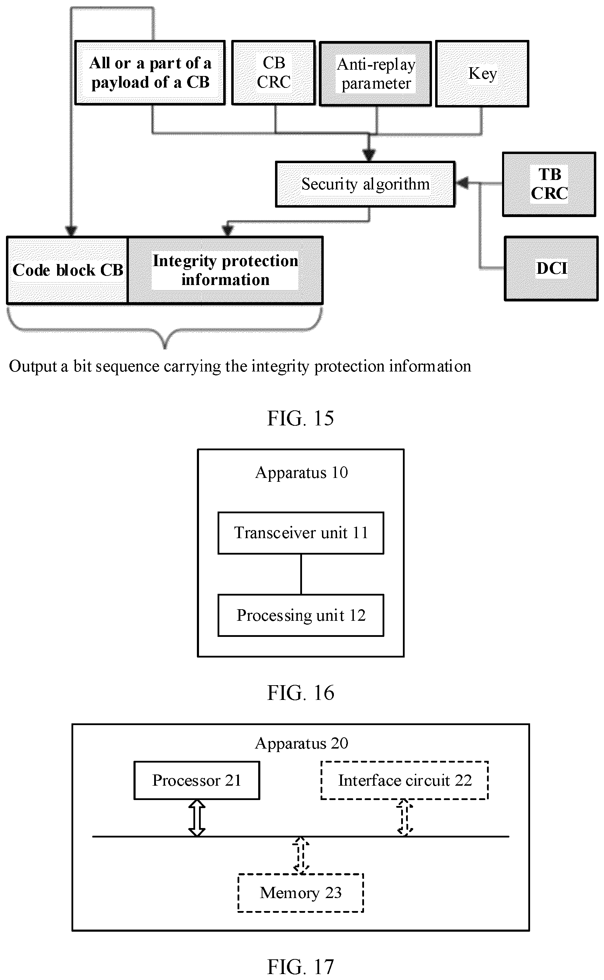

FIG. 13 to FIG. 15 are diagrams of physical layer integrity protection methods for a PDSCH or a PUSCH. As shown in FIG. 13, all or a part of a payload of a CB, CB CRC, an anti-replay parameter, and a physical layer key may be used as an input of a PDSCH integrity protection algorithm (security algorithm), to generate integrity protection information H. As shown in FIG. 14, all or a part of a payload of a CB, CB CRC, TB CRC, an anti-replay parameter, and a physical layer key may be used as an input of a PDSCH integrity protection algorithm (security algorithm), to generate integrity protection information H. As shown in FIG. 15, all or a part of a payload of a CB, CB CRC, TB CRC, scheduling DCI, an anti-replay parameter, and a physical layer key may be used as an input of a PDSCH integrity protection algorithm (security algorithm), to generate integrity protection information H.

The following describes the input parameters of the security algorithm.

### 1. Anti-replay parameter

The anti-replay parameter may include a cell-level parameter and a PDSCH-specific parameter, and may specifically include a PDSCH information element parameter encrypted and delivered via higher layer RRC signaling, and/or another parameter related to transmission of a transport block on a PDSCH at a physical layer, and the like. The anti-replay (anti-replay) parameters may be used as the input of the security algorithm to prevent or alleviate replay attacks.

The cell-level parameter includes one or more of the following information: a physical cell ID, a downlink frequency ARFCN, system bandwidth, BWP information, and the like.

The PDSCH-specific parameter may include one or more of the following information: a time domain parameter, a frequency domain parameter, a sequence generation parameter, an encoding parameter, and the like that are related to transport block processing performed on the PDSCH.
(1) The time domain parameter includes one or more of the following information: a system frame number, a slot slot, a time domain resource configuration index (time domain resource assignment in DCI), and time domain resource configuration (k0 in an information element PDSCH-Config (indicating an offset between a transmission slot of the PDSCH and a transmission slot of the scheduling DCI), a mapping type mapping Type, a start symbol, and a number startSymbolAndLength of consecutive OFDM symbols).
(2) The frequency domain parameter includes one or more of the following information: an allocation type (resourceAllocation, a bitmap, or an RIV (resource indication value, Resource Indication Value)), rbg-Size, a start RB, a number of PRBs, and frequency hopping (Frequency Hopping Flag).
(3) The sequence generation parameter includes one or more of the following information: dmrs-Type, dmrs-AdditionalPosition, maxLength, and a DMRS port. The information element DMRS-DownlinkConfig includes DMRS sequence generation parameters: scramblingID0 and scramblingID1. The information element PDSCH-Config includes a scrambling sequence generation parameter dataScramblingIdentityPDSCH.
(4) The encoding parameter includes one or more of the following information: an MCS (modulation and coding scheme), a new data indicator (NDI), a redundancy version (RV), and a HARQ process number.

The higher layer configuration parameters related to the PDSCH are in the information elements: PD SCH-Config and DMRS-DownlinkConfig. The two information elements may be delivered by a base station to UE via RRCSetup or RRCReconfiguration signaling. The RRC reconfiguration signaling is encrypted and provided with integrity protection.

The higher layer configuration parameters related to the PUSCH are in the information elements: PUSCH-config and DMRS-UplinkConfig. The two information elements may be delivered by the base station to the UE via RRCSetup or RRCReconfiguration signaling. The RRC reconfiguration signaling is encrypted and provided with integrity protection. k2 in the information element PUSCH-Config indicates the offset between the transmission slot of the PUSCH and the transmission slot of the scheduling DCI.

### 2. Security algorithm

A known integrity protection algorithm that is based on a symmetric key may be used as the security algorithm. This is not limited herein.

Optionally, an integrity protection algorithm like SNOW 3G, SNOW V, AES-CMAC, or Zu Chongzhi ZUC used at a PDCP layer in a 4G or 5G standard may be used.

Optionally, an integrity protection algorithm like HMAC-SHA2 or HMAC-SHA3 may be used, and an HMAC hash-based message authentication code (Hash-based Message Authentication Code) is a message authentication code based on a hash operation. Based on a shared symmetric key, the HMAC can use any iterative hash function that may be used for encryption.

In this embodiment, an output result of the security algorithm may be completely used as physical layer integrity protection information; or an output result of the security algorithm may be truncated, and a part of the output result is used as physical layer integrity protection information. Then, the physical layer integrity protection information is used to replace TB CRC or CB CRC and is attached to the transport block or the code block.

3. When the part of the payload of the CB is used as an input of the security algorithm, a method for obtaining the part of the payload of the CB may include any one of the following manners:
Manner 1: A single code block CB is used as a subblock, a payload whose length is Length is truncated from a start offset offset location in the single CB, and the truncated payload whose length is Length is used as an input of the security algorithm, where offset+Length<length of the CB block.

The base station delivers, in the scheduling DCI corresponding to the transport block, parameters such as the offset offset and the truncated length Length, to notify a terminal.

Manner 2: A single code block CB is segmented into N subblocks, a length of each sub-block is subblock_size, and N*subblock_size=a length of the CB block. In each sub-block, a payload whose length is Length is truncated from a start offset offset location, N segments of payloads truncated from the N subblocks are combined into one bit sequence, and the bit sequence is used as an input of the security algorithm, where offset+Length<length of the subblock.

The base station delivers, in the scheduling DCI corresponding to the transport block, parameters such as the length of the subblock, the offset offset, and the truncated length Length, to notify the terminal.

It should be noted that related descriptions in Embodiment 1 to Embodiment 4 may be adaptively applied to the method embodiments in FIG. 7 to FIG. 9. Similarly, related descriptions in the method embodiments in FIG. 7 to FIG. 9 may also be adaptively applied to Embodiment 1 to Embodiment 4. For brevity, details are not described in this application again.

The foregoing describes in detail the method provided in this application with reference to FIG. 7 to FIG. 15. The following describes in detail apparatus embodiments of this application with reference to FIG. 16 and FIG. 17.

It may be understood that, to implement functions in the foregoing embodiments, an apparatus in FIG. 16 or FIG. 17 includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software.

FIG. 16 and FIG. 17 are diagrams of structures of possible apparatuses according to embodiments of this application. These apparatuses may be configured to implement functions of a transmit end or a receive end in the foregoing method embodiments. Therefore, beneficial effect of the foregoing method embodiments can also be implemented.

As shown in FIG. 16, an apparatus 10 includes a transceiver unit 11 and a processing unit 12.

When the apparatus 10 is configured to implement the function of the transmit end in the foregoing method embodiments, the transceiver unit 11 is configured to obtain a first code block and first information. The first code block is a payload of a physical channel, the first information includes at least one of the following information: all or a part of the payload of the first code block, a first check code, an anti-replay parameter, a key, or downlink control information, and the downlink control information is used to schedule the first code block. The processing unit 12 is configured to determine first integrity protection information based on the first information and a security algorithm, and determine a second code block based on the first code block and the first integrity protection information. The second code block includes the first code block and the first integrity protection information. The transceiver unit 11 is further configured to output the second code block.

Optionally, the first check code includes a check code of the first code block and/or a check code of a transport block to which the first code block belongs.

Optionally, the second code block does not include the check code of the first code block.

Optionally, when the first information includes the part of the payload of the first code block, the processing unit 12 is further configured to: obtain the part of the payload of the first code block based on a first offset and a first length, where the first offset is an offset of a start location of the part of the payload of the first code block relative to a start location of the first code block, and the first length is a length of the part of the payload of the first code block; or segment the first code block into a plurality of code subblocks based on segmentation information, and obtain a partial payload of each of the plurality of code subblocks based on a second offset and a second length, where the part of the payload of the first code block includes the partial payload of each code subblock, the second offset is an offset of a start location of the partial payload of each code subblock relative to a start location of the code subblock, and the second length is a length of the partial payload of each code subblock.

Optionally, the first offset, the first length, the segmentation information, the second offset, and the second length are carried in the downlink control information.

Optionally, the physical channel is a physical uplink shared channel, a physical downlink shared channel, a physical uplink control channel, or a physical downlink control channel.

Optionally, when the first information includes the downlink control information, the physical channel is a physical uplink shared channel or a physical downlink shared channel.

Optionally, the anti-replay parameter includes a cell-level parameter and/or a configuration parameter of the physical channel, the cell-level parameter includes at least one of the following parameters: a physical cell identifier, a frequency or a frequency point of a link, system bandwidth, or BWP information, and the configuration parameter of the physical channel includes at least one of the following parameters: a time domain parameter, a frequency domain parameter, a sequence generation parameter, a transmit power control parameter, or an encoding parameter.

Optionally, the security algorithm is an integrity protection algorithm that is based on a symmetric key.

Optionally, the processing unit 12 is further configured to: after an access stratum security protection mode is completed, activate a physical layer integrity protection mechanism.

Optionally, the processing unit 12 is further configured to: after radio link control reconfiguration is completed, update the configuration parameter of the physical channel.

When the apparatus 10 is configured to implement the function of the receive end in the foregoing method embodiments, the transceiver unit 11 is configured to: obtain a received code block of a physical channel, where the received code block includes a payload of the physical channel and second integrity protection information; obtain second information, where the second information includes at least one of the following information: all or a part of the payload of the physical channel, a second check code, an anti-replay parameter, a key, or downlink control information, the downlink control information is used to schedule the received code block, and the second check code is obtained based on the payload of the physical channel. The processing unit 12 is configured to determine third integrity protection information based on the second information and a security algorithm, and perform integrity check on the payload of the physical channel based on the second integrity protection information and the third integrity protection information.

Optionally, the second check code includes a check code of the payload of the physical channel and/or a check code of a transport block to which the payload of the physical channel belongs.

Optionally, the received code block does not include the check code of the payload of the physical channel.

Optionally, when the second information includes the part of the payload of the physical channel, the processing unit 12 is further configured to: obtain the part of the payload of the physical channel based on a first offset and a first length, where the first offset is an offset of a start location of the part of the payload of the physical channel relative to a start location of the payload of the physical channel, and the first length is a length of the part of the payload of the physical channel; or segment the payload of the physical channel into a plurality of code subblocks based on segmentation information, and obtain a partial payload of each of the plurality of code subblocks based on a second offset and a second length, where the part of the payload of the physical channel includes the partial payload of each code subblock, the second offset is an offset of a start location of the partial payload of each code subblock relative to a start location of the code subblock, and the second length is a length of the partial payload of each code subblock.

Optionally, the first offset, the first length, the segmentation information, the second offset, and the second length are carried in the downlink control information.

Optionally, the physical channel is a physical uplink shared channel, a physical downlink shared channel, a physical uplink control channel, or a physical downlink control channel.

Optionally, when the second information includes the downlink control information, the physical channel is a physical uplink shared channel or a physical downlink shared channel.

Optionally, the anti-replay parameter includes a cell-level parameter and/or a configuration parameter of the physical channel, the cell-level parameter includes at least one of the following parameters: a physical cell identifier, a frequency or a frequency point of a link, system bandwidth, or BWP information, and the configuration parameter of the physical channel includes at least one of the following parameters: a time domain parameter, a frequency domain parameter, a sequence generation parameter, a transmit power control parameter, or an encoding parameter.

Optionally, the security algorithm is an integrity protection algorithm that is based on a symmetric key.

Optionally, the processing unit 12 is further configured to: after an access stratum security protection mode is completed, activate a physical layer integrity protection mechanism.

Optionally, the processing unit 12 is further configured to: after radio link control reconfiguration is completed, update the configuration parameter of the physical channel.

For more detailed descriptions of the transceiver unit 11 and the processing unit 12, refer to related descriptions in the foregoing method embodiments. Details are not described herein again.

As shown in FIG. 17, an apparatus 20 includes a processor 21. The processor 21 is coupled to a memory 23, and the memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used at a transmit end or a receive end, the chip implements a function of the transmit end or the receive end in the foregoing method embodiments. The chip receives information from another module (for example, a radio frequency module or an antenna) at the transmit end or the receive end. The information is sent by another apparatus to the transmit end or the receive end. Alternatively, the chip sends information to another module (for example, a radio frequency module or an antenna) at the transmit end or the receive end. The information is sent by the transmit end or the receive end to another apparatus.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

An embodiment of this application further provides a computer-readable storage medium. The computer-readable storage medium stores computer instructions used to implement the method performed by the transmit end or the receive end in the foregoing method embodiments.

An embodiment of this application further provides a computer program product, including instructions. When the instructions are executed by a computer, the method performed by the transmit end or the receive end in the foregoing method embodiments is implemented.

This application further provides a communication system. The communication system includes at least one of the transmit end or the receive end in the foregoing embodiments.

For explanations and beneficial effect of related content in any one of the apparatuses provided above, refer to the corresponding method embodiments provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located at the transmit end or the receive end. Certainly, the processor and the storage medium may exist in the transmit end and the receive end as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining a first code block and first information, wherein the first code block is a payload of a physical channel, the first information comprises at least one of the following information: all or a part of the payload of the first code block, a first check code, an anti-replay parameter, a key, or downlink control information, and the downlink control information is used to schedule the first code block;
determining first integrity protection information based on the first information and a security algorithm;
determining a second code block based on the first code block and the first integrity protection information, wherein the second code block comprises the first code block and the first integrity protection information; and
outputting the second code block.

2. The method according to claim 1, wherein
the first check code comprises a check code of the first code block and/or a check code of a transport block to which the first code block belongs.

3. The method according to claim 1 or 2, wherein
the second code block does not comprise the check code of the first code block.

4. The method according to any one of claims 1 to 3, wherein when the first information comprises the part of the payload of the first code block, the method further comprises:
obtaining the part of the payload of the first code block based on a first offset and a first length, wherein the first offset is an offset of a start location of the part of the payload of the first code block relative to a start location of the first code block, and the first length is a length of the part of the payload of the first code block; or
segmenting the first code block into a plurality of code subblocks based on segmentation information, and obtaining a partial payload of each of the plurality of code subblocks based on a second offset and a second length, wherein the part of the payload of the first code block comprises the partial payload of each code subblock, the second offset is an offset of a start location of the partial payload of each code subblock relative to a start location of the code subblock, and the second length is a length of the partial payload of each code subblock.

5. The method according to claim 4, wherein
the first offset, the first length, the segmentation information, the second offset, and the second length are carried in the downlink control information.

6. The method according to any one of claims 1 to 5, wherein
the physical channel is a physical uplink shared channel, a physical downlink shared channel, a physical uplink control channel, or a physical downlink control channel.

7. The method according to any one of claims 1 to 6, wherein
when the first information comprises the downlink control information, the physical channel is the physical uplink shared channel or the physical downlink shared channel.

8. The method according to any one of claims 1 to 7, wherein
the anti-replay parameter comprises a cell-level parameter and/or a configuration parameter of the physical channel; and
the cell-level parameter comprises at least one of the following parameters: a physical cell identifier, a frequency or a frequency point of a link, system bandwidth, or bandwidth part BWP information, and the configuration parameter of the physical channel comprises at least one of the following parameters: a time domain parameter, a frequency domain parameter, a sequence generation parameter, a transmit power control parameter, or an encoding parameter.

9. The method according to any one of claims 1 to 8, wherein
the security algorithm is an integrity protection algorithm that is based on a symmetric key.

10. The method according to any one of claims 1 to 9, wherein the method further comprises:
after an access stratum security protection mode is completed, activating a physical layer integrity protection mechanism.

11. The method according to any one of claims 1 to 10, wherein the method further comprises:
after radio link control reconfiguration is completed, updating the configuration parameter of the physical channel.

12. A communication method, wherein the method comprises:
obtaining a received code block of a physical channel, wherein the received code block comprises a third code block and second integrity protection information, and the third code block is a payload of the physical channel;
obtaining second information, wherein the second information comprises at least one of the following information: all or a part of a payload of the third code block, a second check code, an anti-replay parameter, a key, or downlink control information, the downlink control information is used to schedule the received code block, and the second check code is obtained based on the third code block;
determining third integrity protection information based on the second information and a security algorithm; and
performing integrity check on the third code block based on the second integrity protection information and the third integrity protection information.

13. The method according to claim 12, wherein
the second check code comprises a check code of the third code block and/or a check code of a transport block to which the third code block belongs.

14. The method according to claim 12 or 13, wherein
the received code block does not comprise the check code of the third code block.

15. The method according to any one of claims 12 to 14, wherein when the second information comprises the part of the payload of the third code block, the method further comprises:
obtaining the part of the payload of the third code block based on a first offset and a first length, wherein the first offset is an offset of a start location of the part of the payload of the third code block relative to a start location of the third code block, and the first length is a length of the part of the payload of the third code block; or
segmenting the third code block into a plurality of code subblocks based on segmentation information, and obtaining a partial payload of each of the plurality of code subblocks based on a second offset and a second length, wherein the part of the payload of the third code block comprises the partial payload of each code subblock, the second offset is an offset of a start location of the partial payload of each code subblock relative to a start location of the code subblock, and the second length is a length of the partial payload of each code subblock.

16. The method according to claim 15, wherein
the first offset, the first length, the segmentation information, the second offset, and the second length are carried in the downlink control information.

17. The method according to any one of claims 12 to 16, wherein
the physical channel is a physical uplink shared channel, a physical downlink shared channel, a physical uplink control channel, or a physical downlink control channel.

18. The method according to any one of claims 12 to 17, wherein
when the second information comprises the downlink control information, the physical channel is the physical uplink shared channel or the physical downlink shared channel.

19. The method according to any one of claims 12 to 18, wherein
the anti-replay parameter comprises a cell-level parameter and/or a configuration parameter of the physical channel; and
the cell-level parameter comprises at least one of the following parameters: a physical cell identifier, a frequency or a frequency point of a link, system bandwidth, or bandwidth part BWP information, and the configuration parameter of the physical channel comprises at least one of the following parameters: a time domain parameter, a frequency domain parameter, a sequence generation parameter, a transmit power control parameter, or an encoding parameter.

20. The method according to any one of claims 12 to 19, wherein
the security algorithm is an integrity protection algorithm that is based on a symmetric key.

21. The method according to any one of claims 12 to 20, wherein the method further comprises:
after an access stratum security protection mode is completed, activating a physical layer integrity protection mechanism.

22. The method according to any one of claims 12 to 21, wherein the method further comprises:
after radio link control reconfiguration is completed, updating the configuration parameter of the physical channel.

23. A communication apparatus, comprising:
a processor, configured to execute a computer program stored in a memory, to enable the apparatus to perform the method according to any one of claims 1 to 11 or the method according to any one of claims 12 to 22.

24. The apparatus according to claim 23, wherein the apparatus further comprises the memory.

25. A computer-readable storage medium, wherein the computer-readable storage medium stores a computer program, and when the computer program is run on a computer, the computer is enabled to perform the method according to any one of claims 1 to 11 or the method according to any one of claims 12 to 22.

26. A computer program product, wherein the computer program product comprises instructions used to perform the method according to any one of claims 1 to 11, or instructions used to perform the method according to any one of claims 12 to 22.

27. A communication system, comprising at least one of the following devices:
a transmit end, configured to perform the method according to any one of claims 1 to 11; and
a receive end, configured to perform the method according to any one of claims 12 to 22.
